(19) Europäisches Patentamt
European Patent Office
Office européen des brevets

(11) EP 4 660 245 A1

(12) **EUROPEAN PATENT APPLICATION**
published in accordance with Art. 153(4) EPC

(43) Date of publication:
**10.12.2025 Bulletin 2025/50**

(21) Application number: **24750610.8**

(22) Date of filing: **01.02.2024**

(51) International Patent Classification (IPC):
***C08L 67/02*** *(2006.01)* ***C08L 1/00*** *(2006.01)*
***C08G 63/16*** *(2006.01)* ***C08K 7/02*** *(2006.01)*
***C08K 9/04*** *(2006.01)* ***C08J 5/04*** *(2006.01)*
***C08J 5/18*** *(2006.01)*

(52) Cooperative Patent Classification (CPC):
**C08G 63/16; C08J 5/04; C08J 5/18; C08K 7/02; C08K 9/04; C08L 1/00; C08L 67/02**

(86) International application number:
**PCT/KR2024/001577**

(87) International publication number:
**WO 2024/162813 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 KR 20230014848**

(71) Applicant: **SK leaveo Co., Ltd.**
**Gyeonggi-do 16338 (KR)**

(72) Inventors:
- **KIM, Kyung Youn**
  **Suwon-si Gyeonggi-do 16338 (KR)**
- **KIM, Seong Dong**
  **Suwon-si Gyeonggi-do 16338 (KR)**
- **KIM, Hoon**
  **Suwon-si Gyeonggi-do 16338 (KR)**
- **YOU, Kyoung Hwan**
  **Suwon-si Gyeonggi-do 16338 (KR)**
- **BYEON, Jun Su**
  **Suwon-si Gyeonggi-do 16338 (KR)**

(74) Representative: **Isarpatent**
**Patent- und Rechtsanwälte**
**Barth Hassa Peckmann & Partner mbB**
**Friedrichstraße 31**
**80801 München (DE)**

# (54) BIODEGRADABLE POLYESTER RESIN COMPOSITION, BIODEGRADABLE POLYESTER FILM COMPRISING SAME, AND BIODEGRADABLE POLYESTER MOLDED ARTICLE COMPRISING SAME

(57) An embodiment provides a biodegradable polyester resin composition comprising: a polyester resin comprising a diol, an aromatic dicarboxylic acid, and an aliphatic dicarboxylic acid; and a fiber-based reinforcing material, wherein a first turbidity change rate of the fiber-based reinforcing material is less than 15%, thereby achieving improved physical properties.

【FIG. 1】

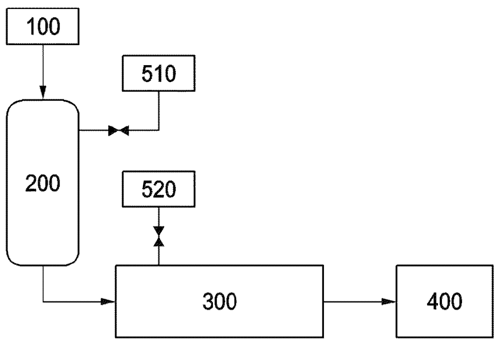


EP 4 660 245 A1

## Description

[Technical Field]

Embodiments relate to a biodegradable polyester resin composition, a biodegradable polyester film including the same and a biodegradable molded article including the same.

[Background Art]

As concerns over environmental issues have recently increased, there is a growing demand for solutions to the disposal of various daily necessities, especially disposable products. Specifically, polymeric materials are widely used to manufacture various products such as films, fibers, packaging materials, bottles, and containers due to their low cost and excellent processability. However, when the useful life of such products ends, incineration may release harmful substances, and natural decomposition may, depending on the type, take hundreds of years to complete.

To overcome such limitations of polymers, research on biodegradable polymers that decompose within a short period of time is actively being conducted. As such biodegradable polymers, polylactic acid (PLA), polybutylene adipate terephthalate (PBAT), and polybutylene succinate (PBS) are being used.

Related to such biodegradable resin compositions, Korean Laid-open Patent Publication No. 2012-0103158 and the like have been disclosed.

[Disclosure]

[Technical Problem]

Therefore, the present invention has been made in view of the above problems, and it is an object of the present invention to provide a biodegradable polyester resin composition having suitably improved mechanical properties, heat resistance, and electrical properties, a biodegradable polyester film including the same and a biodegradable molded article including the same.

[Technical Solution]

In accordance with an aspect of the present invention, the above and other objects can be accomplished by the provision of a biodegradable polyester resin composition, including: a polyester resin including a diol, an aromatic dicarboxylic acid, and an aliphatic dicarboxylic acid; and a fibrous reinforcing material, wherein a first turbidity change rate of the fibrous reinforcing material, measured by the following method, is less than 15%:

[Measurement method]

1) The fibrous reinforcing material is dispersed in water at a concentration of 1 wt% and a speed of 1000 rpm for 30 minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

In an embodiment, the second turbidity change rate of the fibrous reinforcing material, measured by the following method, may be less than 20%:

[Measurement method]

1) The aqueous dispersion is left for 1 hour, and redispersed at 120 rpm for 1 minute, and then an initial turbidity of the aqueous dispersion is measured.

2) The second turbidity change rate is a value obtained by dividing a difference between the first turbidity and the initial turbidity by the first turbidity.

In an embodiment, the fibrous reinforcing material may have an elongated shape, a diameter of 1 nm to 20 nm, and a length of 30 nm to 500 nm.

In an embodiment, the fibrous reinforcing material may include sulfur in an amount of 0.5 wt% to 1.5 wt%.

In an embodiment, the fibrous reinforcing material may include a surface treatment agent including sulfate or carboxylate, and the surface treatment agent may be included in a content of 0.1 mol/kg to 0.5 mol/kg.

In an embodiment, the fibrous reinforcing material may have a zeta potential of - 60 mV to -25 mV.

In an embodiment, the fibrous reinforcing material may have a glass transition temperature of 80°C to 100°C.

In an embodiment, the fibrous reinforcing material may have a thermal decomposition start temperature of 200°C to 240°C, and the fibrous reinforcing material may have a maximum thermal decomposition temperature of 300°C to 360°C.

In an embodiment, the fibrous reinforcing material may include an alkali metal.

In an embodiment, the fibrous reinforcing material may include sulfate in a content of 0.1 mol/kg to 0.5 mol/kg.

In an embodiment, a carboxyl group strength based on hydroxyl groups of the fibrous reinforcing material, measured by the following method, may be 0.2 to 0.8:

[Measurement method]

1) An infrared absorption spectrum of an aqueous dispersion of the fibrous reinforcing material is obtained using infrared spectroscopy.
2) From the infrared absorption spectrum, a first peak is obtained in a wavenumber of 2782 $cm^{-1}$ to 2991 $cm^{-1}$, and a second peak is obtained in a wavenumber of 1531 $cm^{-1}$ to 1769 $cm^{-1}$.
3) The carboxyl group strength is a value obtained by dividing a maximum absorbance of the second peak by a maximum absorbance of the first peak.

In accordance with another aspect of the present invention, there is provided a biodegradable film composition, including: a polyester resin including a diol, an aromatic dicarboxylic acid, and an aliphatic dicarboxylic acid; and a fibrous reinforcing material, wherein a first turbidity change rate of the fibrous reinforcing material, measured by the following method, is less than 15%:

[Measurement method]

1) The fibrous reinforcing material is dispersed in water at a concentration of 1 wt% and a speed of 1000 rpm for 30 minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

In accordance with yet another aspect of the present invention, there is provided a biodegradable molded article, including a biodegradable polyester resin composition, the biodegradable polyester resin composition including: a polyester resin including a diol, an aromatic dicarboxylic acid, and an aliphatic dicarboxylic acid; and a fibrous reinforcing material, wherein a first turbidity change rate of the fibrous reinforcing material, measured by the following method, is less than 15%:

[Measurement method]

1) The fibrous reinforcing material is dispersed in water at a concentration of 1 wt% and a speed of 1000 rpm for 30

minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

[Advantageous effects]

A biodegradable polyester resin composition according to an embodiment includes a polyester resin including a diol, an aromatic dicarboxylic acid, and an aliphatic dicarboxylic acid; and a fibrous reinforcing material having a low turbidity change rate.
The fibrous reinforcing material can have high dispersibility and low agglomeration properties with respect to the diol. Accordingly, the fibrous reinforcing material can be uniformly dispersed in the diol without agglomeration and, accordingly, can be introduced into a process of producing the polyester resin.
As a result, the fibrous reinforcing material can be uniformly dispersed within the biodegradable polyester resin composition according to an embodiment.
The fibrous reinforcing material can have high electrical conductivity. In addition, the fibrous reinforcing material can have an appropriate aspect ratio. The fibrous reinforcing material can include sulfate or carboxylate in an appropriate amount. In addition, the fibrous reinforcing material can have an appropriate zeta potential. Furthermore, the fibrous reinforcing material can have an appropriate glass transition temperature. In addition, the fibrous reinforcing material can have an appropriate thermal decomposition start temperature. In addition, the fibrous reinforcing material can have an appropriate maximum thermal decomposition temperature.
Accordingly, the biodegradable polyester resin composition according to an embodiment can have improved mechanical properties, improved thermal properties, improved optical properties, and improved electrical properties.
The biodegradable polyester resin composition according to an embodiment can maintain a certain level or more of mechanical and chemical properties during the user’s period of use.
Therefore, a biodegradable film and biodegradable molded article according to the embodiment can have improved properties as described above.

[Description of Drawings]

FIG. 1 is a diagram schematically illustrating an apparatus for producing a polyester resin composition according to an embodiment; and
FIG. 2 illustrates an embodiment of a biodegradable molded article formed of a polyester resin composition according to an embodiment.

[Best Mode]

Hereinafter, the present invention will be described in more detail with reference to the following embodiments. The scope of the present invention is not limited to the following embodiments and covers modifications of the technical spirit substantially equivalent thereto.
In the specification, when a certain part "includes" a certain component, this indicates that the part may further include another component instead of excluding another component unless there is no different invention.
In addition, it should be understood that all numerical ranges representing physical property values, dimensions, etc. of components described in this specification are modified by the term ’about’ in all cases unless otherwise specified.
In this specification, Terms such as first, second, primary, and secondary are used to describe various components, and the components are not limited by the terms. The terms are only used for the purpose of distinguishing one component from another.
The biodegradable polyester resin composition according to an embodiment includes a biodegradable polyester resin. The biodegradable polyester resin composition according to an embodiment may include the biodegradable polyester resin alone or together with other resins or additives.
The biodegradable polyester resin includes a diol, an aromatic dicarboxylic acid and an aliphatic dicarboxylic acid. The biodegradable polyester resin includes a diol residue, an aromatic dicarboxylic acid residue and an aliphatic dicarboxylic acid residue. The diol residue is derived from the diol, the aromatic dicarboxylic acid residue is derived from

the aromatic dicarboxylic acid, and the aliphatic dicarboxylic acid residue is derived from the aliphatic dicarboxylic acid. The biodegradable polyester resin includes a diol component, an aromatic dicarboxylic acid component and an aliphatic dicarboxylic acid component. Likewise, the diol component may be derived from the diol, the aromatic dicarboxylic acid component may be derived from the aromatic dicarboxylic acid, and the aliphatic dicarboxylic acid component may be derived from the aliphatic dicarboxylic acid.

In a description of the biodegradable polyester resin composition according to an embodiment, a diol residue may be expressed as a diol. In the biodegradable polyester resin, a dicarboxylic acid residue may be expressed as dicarboxylic acid. In addition, the residue may be expressed as a component.

The diol may be an aliphatic diol. The diol may be a bio-derived diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol or derivatives thereof.

The diol may be at least one selected from the group consisting of 1,4-butanediol, 1,2-ethanediol, 1,3-propanediol, diethylene glycol and neopentyl glycol or derivatives thereof.

The diol may be at least one selected from the group consisting of 1,4-butanediol, 1,2-ethanediol, 1,3-propanediol or derivatives thereof.

The diol may include 1,4-butanediol or a derivative thereof.

The diol may be derived from biomass.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, 4,4'-diphenyl ether dicarboxylic acid, anthracen dicarboxylic acid, and phenanthren dicarboxylic acid or derivatives thereof.

The aromatic dicarboxylic acid may be at least one selected from the group consisting of terephthalic acid, dimethyl terephthalate, 2,6-naphthalene dicarboxylic acid, isophthalic acid or derivatives thereof.

The aromatic dicarboxylic acid may include terephthalic acid, dimethyl terephthalate or a derivative thereof.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid and 1,4-cyclohexanedicarboxylic acid or derivatives thereof.

The aliphatic dicarboxylic acid may be at least one selected from the group consisting of adipic acid, succinic acid and sebacic acid or derivatives thereof.

The aliphatic dicarboxylic acid may include an adipic acid or a derivative thereof.

In the biodegradable polyester resin, a molar ratio of all diol residues including the diol to all dicarboxylic acid residues including the aromatic dicarboxylic acid and the aliphatic dicarboxylic acid may be about 1:0.9 to about 1:1.1. A molar ratio of all diol residues to all dicarboxylic acid residues may be about 1:0.95 to about 1:1.05.

In the biodegradable polyester resin, a molar ratio of the aromatic dicarboxylic acid residue to the aliphatic dicarboxylic acid residue may be about 3:7 to about 7:3. In the biodegradable polyester resin, a molar ratio of the aromatic dicarboxylic acid residue to the aliphatic dicarboxylic acid residue may be about 3.3:6.7 to about 6.7:3.3. In the biodegradable polyester resin, a molar ratio of the aromatic dicarboxylic acid residue to the aliphatic dicarboxylic acid residue may be about 4:6 to about 6:4. In the biodegradable polyester resin, a molar ratio of the aromatic dicarboxylic acid residue to the aliphatic dicarboxylic acid residue may be about 4.2:5.8 to about 5:5.

The biodegradable polyester resin may include a diol residue derived from 1,4-butanediol in a content of about 90 mol% or more based on the total diol. The biodegradable polyester resin may include a diol residue derived from 1,4-butanediol in a content of about 95 mol% or more based on the total diol. The biodegradable polyester resin may include a diol residue derived from 1,4-butanediol in a content of about 98 mol% or more based on the total diol.

The biodegradable polyester resin may include an aromatic dicarboxylic acid residue derived from terephthalic acid or dimethyl terephthalate in a content of about 30 mol% to about 70 mol% based on the total dicarboxylic acid. The biodegradable polyester resin may include an aromatic dicarboxylic acid residue derived from terephthalic acid or dimethyl terephthalate in a content of about 35 mol% to about 65 mol% based on the total dicarboxylic acid. The biodegradable polyester resin may include a dicarboxylic acid residue derived from terephthalic acid or dimethyl terephthalate in a content of about 40 mol% to about 59 mol% based on the total dicarboxylic acid. The biodegradable polyester resin may include an aromatic dicarboxylic acid residue derived from terephthalic acid or dimethyl terephthalate in a content of about 43 mol% to about 53 mol% based on the total dicarboxylic acid.

The biodegradable polyester resin may include an aliphatic dicarboxylic acid residue derived from adipic acid in a content of about 30 mol% to about 70 mol% based on the total dicarboxylic acid. The biodegradable polyester resin may include an aliphatic dicarboxylic acid residue derived from adipic acid in a content of about 35 mol% to about 65 mol% based on the total dicarboxylic acid. The biodegradable polyester resin may include an aliphatic dicarboxylic acid residue

derived from adipic acid in a content of about 41 mol% to about 60 mol% based on the total dicarboxylic acid. The biodegradable polyester resin may include an aliphatic dicarboxylic acid residue derived from adipic acid in a content of about 47 mol% to about 57 mol% based on the total dicarboxylic acid.

In addition, the biodegradable polyester resin may include at least one first block and at least one second block. The biodegradable polyester resin may have a molecular structure in which the first block and the second block are alternately bonded.

The first block may include the diol residue and the aromatic dicarboxylic acid residue. The first block may be formed by esterification of the diol and the aromatic dicarboxylic acid. The first block may include only the diol residue and the aromatic dicarboxylic acid residue. The first block may include only repeating units formed by the esterification of the diol and the aromatic dicarboxylic acid. That is, the first block may mean the sum of repeating units of the diol and the aromatic dicarboxylic acid before being combined with the aliphatic dicarboxylic acid.

The second block may include the diol residue and the aliphatic dicarboxylic acid residue. The second block may be formed by esterification of the diol and the aliphatic dicarboxylic acid. The second block may include only the diol residue and the aliphatic dicarboxylic acid residue. The second block may include only repeating units formed by the esterification of the diol and the aliphatic dicarboxylic acid. That is, the second block may mean the sum of repeating units of the diol and the aliphatic dicarboxylic acid before being combined with the aromatic dicarboxylic acid.

In the biodegradable polyester resin, a ratio (X/Y) of the number (X) of the first blocks to the number (Y) of the second blocks may be about 0.5 to about 1.5. In the biodegradable polyester resin, the ratio (X/Y) of the number (X) of the first blocks to the number (Y) of the second blocks may be about 0.6 to about 1.4. In the biodegradable polyester resin, the ratio (X/Y) of the number (X) of the first blocks to the number (Y) of the second blocks may be about 0.7 to about 1.3. In the biodegradable polyester resin, the ratio (X/Y) of the number (X) of the first blocks to the number (Y) of the second blocks may be about 0.75 to about 1.2. In addition, in the biodegradable polyester resin, the ratio (X/Y) of the number (X) of the first blocks to the number (Y) of the second blocks may be 0.8 to 1. The number of the first blocks may be smaller than the number of the second blocks.

The number of the first blocks may be about 30 to about 300. The number of the first blocks may be about 40 to about 250. The number of the first blocks may be about 50 to about 220. The number of the first blocks may be about 60 to about 200. The number of the first blocks may be about 70 to about 200. The number of the first blocks may be about 75 to about 200.

The number of the first blocks may vary depending upon the content of the aromatic dicarboxylic acid, the molecular weight of the biodegradable polyester resin and an alternation ratio to be described below. That is, the number of the first blocks may increase as a molar ratio of the aromatic dicarboxylic acid increases, as the molecular weight of the biodegradable polyester resin increases, and as an alternation ratio to be described below increases.

The number of the second blocks may be about 30 to about 300. The number of the second blocks may be about 40 to about 250. The number of the second blocks may be about 50 to about 220. The number of the second blocks may be about 60 to about 200. The number of the second blocks may be about 70 to about 200. The number of the second blocks may be about 75 to about 200.

The number of the second blocks may vary depending on the content of the aliphatic dicarboxylic acid, the molecular weight of the biodegradable polyester resin, and the polymerization process described below. That is, as the molar ratio of the aliphatic dicarboxylic acid increases and the molecular weight of the biodegradable polyester resin increases, the number of the first blocks may increase.

When the biodegradable polyester resin includes the first block and the second block within the range, the biodegradable polyester resin composition according to an embodiment may have appropriate biodegradability while having appropriate mechanical strength. In addition, when the biodegradable polyester resin includes the first block and the second block within the range, the biodegradable polyester resin composition according to an embodiment may have improved stiffness while having improved flexibility. Accordingly, the biodegradable polyester resin composition according to an embodiment may be used for an injection-molded article, etc. In addition, when the biodegradable polyester resin includes the first block and the second block within the range, the biodegradable polyester resin composition according to an embodiment may have appropriate biodegradability while having appropriate durability to ultraviolet light, and the like.

The first block may be represented by Formula 1 below:

[Formula 1]

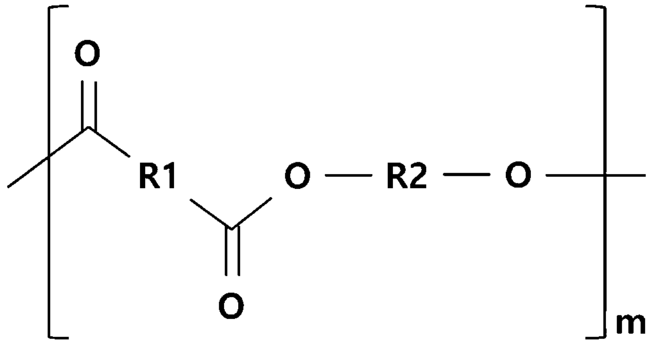

where R1 is a substituted or unsubstituted arylene group having 6 to 20 carbon atoms, R2 is a substituted or unsubstituted alkylene group having 1 to 20 carbon atoms, and m is 1 to 20.

R1 may be a substituted or unsubstituted phenylene group, and R2 may be a butylene group.

The second block may be represented by Formula 2 below:

[Formula 2]

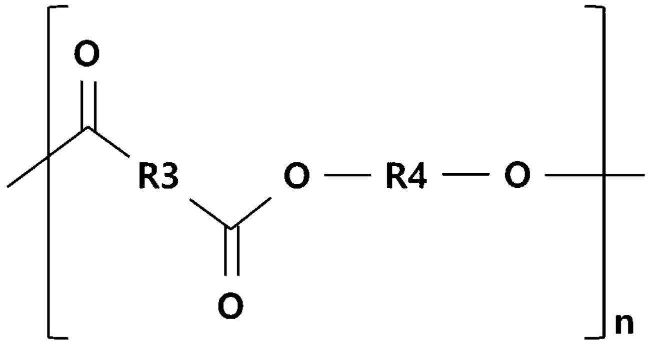

where R3 and R4 are each independently a substituted or unsubstituted alkylene group having 1 to 20 carbon atoms, and n is 1 to 20.

R3 and R4 may be a butylene group.

The biodegradable polyester resin may have a structure in which the first block and the second block are alternately bonded to each other. The biodegradable polyester resin may be represented by Formula 3 below.

[Formula 3]

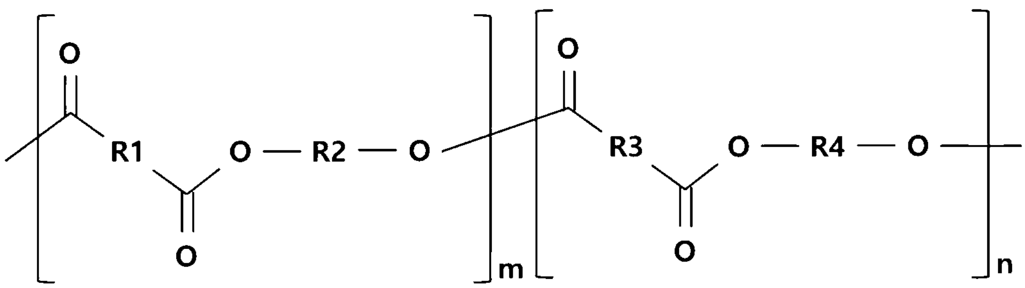

where R1 is a substituted or unsubstituted arylene group having 6 to 20 carbon atoms, R2 is a substituted or unsubstituted alkylene group having 1 to 20 carbon atoms, and m is 1 to 20. In addition, R3 and R4 are each independently a substituted

or unsubstituted alkylene group having 1 to 20 carbon atoms, and n is 1 to 20.

The diol residue may include a residue of 1,4-butanediol or derivative thereof, the aromatic dicarboxylic acid residue may include a residue of terephthalic acid or derivative thereof, and the aliphatic dicarboxylic acid residue may include a residue of adipic acid or derivative thereof.

For example, the biodegradable polyester resin may include a first block including a residue of 1,4-butanediol or derivative thereof and a residue of terephthalic acid or derivative thereof.

Alternatively, the biodegradable polyester resin may include a first block including a residue of 1,4-butanediol or derivative thereof and a residue of dimethyl terephthalate or derivative thereof.

The biodegradable polyester resin may include a second block including a residue of 1,4-butanediol or derivative thereof and a residue of adipic acid or derivative thereof.

Alternatively, the biodegradable polyester resin may include a second block including a residue of 1,4-butanediol or derivative thereof and a residue of succinic acid or derivative thereof.

A biodegradable polyester resin according to an embodiment of the present invention may include a first block including a residue of 1,4-butanediol or derivative thereof and a residue of terephthalic acid or derivative thereof; and a second block including a residue of 1,4-butanediol or derivative thereof and a residue of adipic acid or derivative thereof.

The first block may be represented by Formula 4 below, and the second block may be represented by Formula 5 below:

[Formula 4]

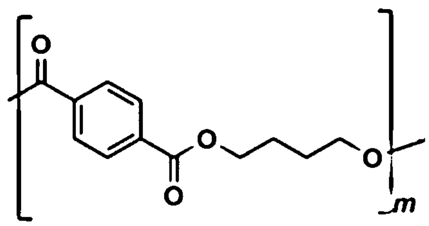

where m is 1 to 20.

[Formula 5]

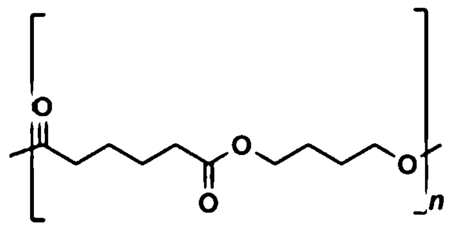

where n is 1 to 20.

The biodegradable polyester resin may be represented by Formula 6 below:

[Formula 6]

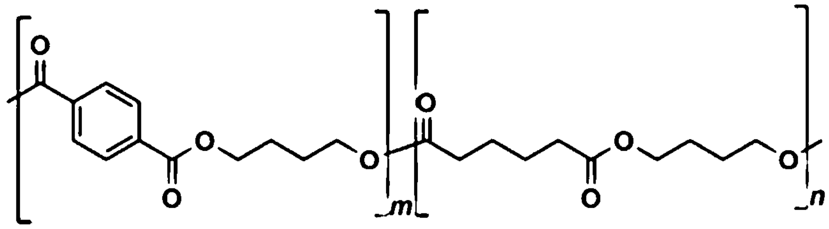

where m is 1 to 20, and n is 1 to 20.

When the first block and the second block satisfy the constitution, it may be more advantageous to provide a biodegradable polyester sheet, film or molded article having excellent biodegradability and water degradability and improved properties.

In addition, when the biodegradable polyester resin includes the first block and the second block within the range, the biodegradable polyester resin composition according to an embodiment may have appropriate mechanical properties and appropriate UV resistance.

Since the first and second blocks have the characteristics, the mechanical properties of the biodegradable polyester resin composition according to an embodiment may be improved.

Since the first and second blocks have the characteristics, the biodegradable polyester resin composition according to an embodiment may have appropriate UV resistance.

Since the first and second blocks have the characteristics, the biodegradable polyester resin composition according to an embodiment may have an appropriate biodegradation rate.

Since the first and second blocks have the characteristics, the biodegradable polyester resin composition according to an embodiment may have an appropriate hydrolysis rate.

The biodegradable polyester resin may further include a branching agent. The branching agent may include at least one selected from the group consisting of a trihydric or higher alcohol, an anhydride and a trihydric or higher carboxylic acid. The branching agent may react with the diol, the aromatic dicarboxylic acid and the aliphatic dicarboxylic acid. Accordingly, the branching agent may be included as a part of the molecular structure of the biodegradable polyester resin.

The trihydric or higher alcohol may be at least one selected from the group consisting of glycerol, pentaerythritol or trimethylolpropane.

The trihydric or higher carboxylic acid may be at least one selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid and benzene-1,2,4,5-tetracarboxylic acid.

The branching agent may be included in a content of about 0.03 wt% to about 5 wt% in the biodegradable polyester resin based on the total amount of the biodegradable polyester resin. The branching agent may be included in a content of about 0.04 wt% to about 3 wt% in the biodegradable polyester resin based on the total amount of the biodegradable polyester resin. The branching agent may be included in a content of about 0.05 wt% to about 1 wt% in the biodegradable polyester resin based on the total amount of the biodegradable polyester resin.

Since the biodegradable polyester resin includes the branching agent within the range, the biodegradable polyester resin composition according to an embodiment may have appropriate mechanical characteristics and appropriate biodegradability.

The biodegradable polyester resin composition according to an embodiment may include the biodegradable resin in a content of about 30 wt% or more based on the total weight of the composition. The biodegradable polyester resin composition according to an embodiment may include the biodegradable resin in a content of about 50 wt% or more based on the total weight of the composition. The biodegradable polyester resin composition according to an embodiment may include the biodegradable resin in a content of about 70 wt% or more based on the total weight of the composition. The biodegradable polyester resin composition according to an embodiment may include the biodegradable resin in a content of about 80 wt% or more based on the total weight of the composition. The biodegradable polyester resin composition according to an embodiment may include the biodegradable resin in a content of about 90 wt% or more based on the total weight of the composition. The biodegradable polyester resin composition according to an embodiment may include the biodegradable resin in a content of about 95 wt% or more based on the total weight of the composition. The biodegradable polyester resin composition according to an embodiment may include the biodegradable resin in a content of about 99 wt% or more based on the total weight of the composition. A maximum content of the biodegradable resin in the biodegradable polyester resin composition according to an embodiment may be about 100 wt% based on the total weight of the

composition.

The biodegradable polyester resin composition according to an embodiment may further include a reinforcing material. The reinforcing material may improve the mechanical properties of the biodegradable polyester resin composition according to an embodiment and the mechanical properties of a film or molded article made of the composition. In addition, the reinforcing material may control the deformation characteristics of the biodegradable polyester resin composition according to an embodiment due to ultraviolet rays. In addition, the reinforcing material may control the hydrolysis characteristics of the biodegradable polyester resin composition according to an embodiment. In addition, the reinforcing material may control the biodegradability of the biodegradable polyester resin according to an embodiment.

The reinforcing material may be a fiber derived from biomass. The reinforcing material may be a fiber made of an organic material. The reinforcing material may be nanocellulose.

The nanocellulose may be one or more selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocellulose may include an alkali metal. The nanocrystalline cellulose may include elemental sodium. In addition, the nanocrystalline cellulose may include sulphate. The nanocrystalline cellulose may include a carboxylate. The nanocrystalline cellulose may include a cellulose hydrogen sulphate sodium salt(Cellulose hydrogen sulphate sodium salt.

The nanocellulose may be represented by Formula 7 below:

[Formula 7] $[(C_6H_{10}O_5)_xSO_3Na]_y$

where x is 1 to 35, and y is 1 to 10. x may be 15 to 35, and y may be 1 to 10.

The specific surface area of the nanocellulose may be about 200 $m^2/g$ to about 600 $m^2/g$. The specific surface area of the nanocellulose may be about 250 $m^2/g$ to about 500 $m^2/g$.

The weight average molecular weight of the nanocellulose may be about 10000 g/mol to about 70000 g/mol. The weight average molecular weight of the nanocrystalline cellulose may be about 11000 g/mol to about 60000 g/mol.

The moisture content of the nanocrystalline cellulose may be about 2 wt% to about 8 wt%. The moisture content of the nanocrystalline cellulose may be about 4 wt% to about 6 wt%.

The average diameter of the nanocellulose may be about 0.5 nm to about 20 nm. The average diameter of the nanocellulose may be about 1 nm to about 15 nm. The average diameter of the nanocellulose may be about 1.5 nm to about 12 nm. The average diameter of the nanocellulose may be about 2 nm to about 11 nm.

The average length of the nanocellulose may be about 20 nm to about 300 nm. The average length of the nanocellulose may be about 30 nm to about 500 nm. The average length of the nanocellulose may be about 30 nm to about 180 nm. The average length of the nanocellulose may be about 35 nm to about 150 nm. The average length of the nanocellulose may be about 100 nm to about 300 nm.

The nanocellulose may have an aspect ratio (average length/average diameter) of about 10 to about 50. The aspect ratio of the nanocellulose may be about 20 to about 40. The aspect ratio of the nanocellulose may be about 25 to about 35.

Since the nanocellulose has the average diameter, average length and aspect ratio described above, the mechanical properties of the biodegradable resin composition according to an embodiment may be efficiently reinforced.

In particular, when the diameter and length of the nanocellulose satisfy the above ranges, the biodegradability and properties of the biodegradable resin or a biodegradable polyester sheet, film and molded article obtained using the first biodegradable resin may be further improved.

The diameter and length of the nanocellulose may be measured by atomic force microscopy in a state of being dispersed in water.

The content of sulfur in the nanocellulose may be about 0.05 wt% to about 1.2 wt% based on the total amount of the nanocellulose. The content of sulfur in the nanocellulose may be about 0.1 wt% to about 1.1 wt% based on the total amount of the nanocellulose. The content of sulfur in the nanocellulose may be about 0.5 wt% to about 1.5 wt% based on the total amount of the nanocellulose.

The content of sulfur in the nanocellulose may be measured according to ASTM D2622.

The nanocellulose may include a surface treatment agent. The surface treatment agent may include at least one selected from the group consisting of sulfate and carboxylate. That is, the nanocellulose may be surface-treated with sulfate or carboxylate.

The content of the surface treatment agent may be about 0.05 mol/kg to about 1 mol/kg. The content of the surface treatment agent may be about 0.1 mol/kg to about 0.5 mol/kg. The content of the surface treatment agent may be about 0.2 mol/kg to about 0.4 mol/kg.

The nanocellulose may include sulfate in a content of about 0.05 mol/kg to about 1 mol/kg. The nanocellulose

may include sulfate in a content of about 0.1 mol/kg to about 0.5 mol/kg. The nanocellulose may include sulfate in a content of about 0.15 mol/kg to about 0.4 mol/kg. The nanocellulose may include sulfate in a content of about 0.2 mol/kg to about 0.3 mol/kg.

The content of the sulfate may be measured by Fourier Transform Infrared Spectroscopy (FTIR).

The nanocellulose may include carboxylate in a content of about 0.05 mol/kg to about 1 mol/kg. The nanocellulose may include carboxylate in a content of about 0.1 mol/kg to about 0.5 mol/kg. The nanocellulose may include carboxylate in a content of about 0.1 mol/kg to about 0.4 mol/kg. The nanocellulose may include carboxylate in a content of about 0.1 mol/kg to about 0.3 mol/kg.

The content of the carboxylate may be measured by FTIR.

The nanocellulose may have a carboxyl group strength based on hydroxyl groups.

The carboxyl group strength based on hydroxyl groups may be measured by Measurement Method 2 below:

[Measurement Method 2]

1) The nanocellulose is dispersed in water at a concentration of about 1 wt%, thereby obtaining an aqueous dispersion of the nanocellulose.
2) The infrared absorption spectrum of the aqueous dispersion of the nanocellulose is obtained by infrared spectroscopy.
3) In the infrared absorption spectrum, a first peak is obtained at a wavenumber of 2782 $cm^{-1}$ to 2991 $cm^{-1}$, and a second peak is obtained at a wavenumber of 1531 $cm^{-1}$ to 1769 $cm^{-1}$.
4) The carboxyl group strength based on hydroxyl groups is a value obtained by dividing the maximum absorbance of the second peak by the maximum absorbance of the first peak.

The infrared absorption spectrum may be measured by an infrared spectrophotometer (Fourier Transform Infrared Spectrometer). The infrared spectrophotometer may be selected from a group consisting of Spectrum 2, Spectrum 3, or Spotlight 200i/400i by PerkinElmer.

The carboxyl group strength based on hydroxyl groups may be 0.2 to 0.8. The carboxyl group strength based on hydroxyl groups may be 0.25 to 0.75. The carboxyl group strength based on hydroxyl groups may be 0.2 to 0.6. The carboxyl group strength based on hydroxyl groups may be 0.5 to 0.8.

Since the nanocellulose has a carboxyl group strength based on hydroxyl groups within the range as described above, it may have an appropriate content of hydroxyl groups and carboxyl groups. Accordingly, the nanocellulose may be uniformly dispersed in the biodegradable resin composition according to the embodiment, and may have a strong binding force with the polymer included in the biodegradable resin. As a result, the nanocellulose may improve the mechanical properties of the biodegradable resin composition according to the embodiment.

The pH of the nanocellulose may be 5 to 7. The pH of the nanocellulose may be 6 to 7. The pH of the nanocellulose may be 5 to 8.

The zeta potential of the nanocellulose may be about -60 mV to about -20 mV. The zeta potential of the nanocellulose may be about -50 mV to about -25 mV. The zeta potential of the nanocellulose may be about -45 mV to about -30 mV. The zeta potential of the nanocellulose may be about - 60 mV to about -25 mV. The zeta potential of the nanocellulose may be about - 55mV to about -30mV.

The zeta potential of the cellulose may be measured with a zeta potential meter (e.g., Zetasizer Nano ZS, Malvern).

Since the nanocellulose has sulfur, sulfate, carboxylate, pH, and zeta potential within the range as described above, it may exhibit improved dispersibility in water or alcohol, and the like.

The conductivity of the nanocellulose may be about 50 μS/cm to about 2000 μS/cm. The conductivity of the nanocellulose may be about 100 μS/cm to about 1000 μS/cm. The conductivity of the nanocellulose may be about 150 μS/cm to about 1000 μS/cm. The conductivity of the nanocellulose may be about 200 μS/cm to about 1000 μS/cm.

The conductivity may be measured by a pH meter when the nanocellulose is dispersed in water at a concentration of about 2 wt%.

Since the nanocellulose has conductivity within the range as described above, the biodegradable polyester resin composition according to an embodiment may exhibit improved electrical properties.

The glass transition temperature of the nanocellulose may be about 70°C to about 110°C. The glass transition temperature of the nanocellulose may be about 80°C to about 100°C. The glass transition temperature of the nanocellulose may be about 85°C to about 95°C. The glass transition temperature of the nanocellulose may be about 80°C to about 95°C. The glass transition temperature of the nanocellulose may be about 85°C to about 100°C.

The glass transition temperature may be measured by a differential scanning calorimeter.

The thermal decomposition start temperature of the nanocellulose may be about 190°C to about 250°C. The thermal decomposition start temperature of the nanocellulose may be about 200°C to about 240°C. The thermal decomposition start temperature of the nanocellulose may be about 210°C to about 230°C. The thermal decomposition start temperature of the nanocellulose may be about 210°C to about 250°C.

The maximum thermal decomposition temperature of the nanocellulose may be about 290°C to about 380°C. The maximum thermal decomposition temperature of the nanocellulose may be about 300°C to about 360°C. The maximum thermal decomposition temperature of the nanocellulose may be about 310°C to about 360°C. The maximum thermal decomposition temperature of the nanocellulose may be about 315°C to about 360°C. The maximum thermal decomposition temperature of the nanocellulose may be about 320°C to about 360°C.

The thermal decomposition start temperature and the maximum thermal decomposition temperature may be measured by a thermogravimetric analyzer.

The cellulose nanocrystal sample may be placed in a thermogravimetric analyzer (TGA Q500 V20, TA Instruments) and heated under a nitrogen atmosphere from about 150°C to about 600°C at a rate of about 10°C/min. Here, the thermal decomposition start temperature may be a temperature at which thermal decomposition begins after the weight of the sample has decreased by about 4 wt%. In addition, the maximum thermal decomposition temperature may be a temperature at which the rate of weight loss of the sample with respect to temperature is the greatest.

Since the nanocellulose has a glass transition temperature, thermal decomposition start temperature, and maximum thermal decomposition temperature within the range as described above, the biodegradable polyester resin composition according to an embodiment may exhibit improved heat resistance.

In addition, since the nanocellulose has improved heat resistance as described above, the formation of carbonized materials may be prevented during the production process of the biodegradable polyester resin composition according to an embodiment.

Accordingly, the biodegradable polyester resin composition according to an embodiment may have an improved appearance.

The nanocellulose may have a first turbidity change rate.

The turbidity of the nanocellulose may be measured by the following method.

First, the nanocellulose is dispersed in water to obtain an aqueous dispersion. The aqueous dispersion may contain the nanocellulose at a concentration of about 1 wt%. The aqueous dispersion may contain the nanocellulose at a concentration of about 0.5 wt%. The aqueous dispersion may contain the nanocellulose at a concentration of about 1.5 wt%.

The water and the nanocellulose may be sufficiently mixed to prepare the aqueous dispersion. The nanocellulose and the water may be dispersed at a speed of about 1000 rpm for about 30 minutes or more to prepare the aqueous dispersion.

The nanocellulose may be dispersed in the water at a concentration of about 1 wt% at a speed of about 1000 rpm for about 30 minutes to obtain the aqueous dispersion of the nanocellulose.

Next, the aqueous dispersion may be stabilized for about 1 hour, and then redispersed at a speed of about 120 rpm for about 1 minute, and the initial turbidity of the aqueous dispersion may be measured.

In addition, the aqueous dispersion may be left at room temperature for about 2 days, and redispersed at a speed of about 120 rpm for about 1 minute, and then the first turbidity of the aqueous dispersion may be measured.

In addition, the aqueous dispersion may be left at room temperature for about 4 days, and redispersed at a speed of about 120 rpm for about 1 minute, and then the third turbidity of the aqueous dispersion may be measured.

In addition, the aqueous dispersion may be left at room temperature for about 6 days, and redispersed at a speed of about 120 rpm for about 1 minute, and then the second turbidity of the aqueous dispersion may be measured.

The nanocellulose may have a first turbidity change rate.

The first turbidity change rate is a value obtained by dividing the difference between the second turbidity and the first turbidity by the first turbidity.

The first turbidity change rate may be derived according to Equation 1 below:

[Equation 1]

$$\text{First turbidity change rate} = \left| \text{Second turbidity - First turbidity} \right| / \text{First turbidity}$$

The first turbidity change rate may be less than about 20%. The first turbidity change rate may be less than about 10%. The first turbidity change rate may be less than about 15%. The first turbidity change rate may be less than about 7%. The first turbidity change rate may be less than about 5%.

The fibrous reinforcing material may have a second turbidity change rate.

The second turbidity change rate is a value obtained by dividing the difference between the first turbidity and the initial turbidity by the first turbidity.

The second turbidity change rate may be derived by Equation 2 below:

[Equation 2]

$$\text{Second turbidity change rate} = \left|\text{Initial turbidity - First turbidity}\right| / \text{First turbidity}$$

The second turbidity change rate may be less than about 20%. The second turbidity change rate may be less than about 25%. The second turbidity change rate may be less than about 17%. The second turbidity change rate may be less than about 15%.

The first turbidity may be about 100 NTU to about 300 NTU. The first turbidity may be about 120 NTU to about 270 NTU. The first turbidity may be about 70 NTU to about 110 NTU. The first turbidity may be about 80 NTU to about 100 NTU.

The second turbidity may be about 95 NTU to about 295 NTU. The second turbidity may be about 115 NTU to about 265 NTU. The second turbidity may be about 70 NTU to about 110 NTU. The second turbidity may be about 77 NTU to about 97 NTU.

The third turbidity may be about 95 NTU to about 295 NTU. The third turbidity may be about 115 NTU to about 265 NTU. The third turbidity may be about 70 NTU to about 110 NTU. The third turbidity may be about 77 NTU to about 97 NTU.

The initial turbidity may be about 230 NTU to about 350 NTU. The initial turbidity may be about 90 NTU to about 115 NTU. The initial turbidity may be about 450 NTU to about 550 NTU.

The turbidity of the aqueous dispersion may be measured with a turbidity meter. The turbidity of the aqueous dispersion may be measured by a scattered light measurement method.

When a sample containing a turbidity substance is present at a turbidity detector of a calibrated optical system in a light-receiving unit which is placed at a 90° angle to a light source unit, scattered light proportional to the turbidity is generated. By measuring this scattered light, turbidity can be sensitively detected, particularly at low concentrations.

The scattered light measurement method may measure the scattered light at a 90° angle by irradiating light onto one side of the aqueous dispersion, where the light is scattered upon colliding with particles in the liquid.

Since the fibrous reinforcing material has a turbidity and a turbidity change rate within the range as described above, it exhibits improved dispersibility and low agglomeration. In addition, since the fibrous reinforcing material has a turbidity change rate within the range as described above, it may maintain improved dispersibility and low agglomeration over an extended period of time.

The nanocellulose may be included in a content of about 0.01 parts by weight to about 2 parts by weight in the biodegradable polyester resin composition according to an embodiment based on 100 parts by weight of the biodegradable polyester resin. The nanocellulose may be included in a content of about 0.03 parts by weight to about 1.5 parts by weight in the biodegradable polyester resin composition according to an embodiment based on 100 parts by weight of the biodegradable polyester resin. The nanocellulose may be included in a content of about 0.04 parts by weight to about 1.2 parts by weight in the biodegradable polyester resin composition according to an embodiment based on 100 parts by weight of the biodegradable polyester resin. The nanocellulose may be included in a content of about 0.05 parts by weight to about 1 part by weight in the biodegradable polyester resin composition according to an embodiment based on 100 parts by weight of the biodegradable polyester resin.

Since the nanocellulose has the characteristics, it may be uniformly dispersed in the biodegradable polyester resin composition according to an embodiment.

Since the nanocellulose has the characteristics, it may improve the mechanical properties of the biodegradable polyester resin composition according to an embodiment.

In addition, the nanocellulose servers as a nucleating agent, thereby being capable of improving the crystallization rate of the biodegradable polyester resin composition according to an embodiment. Accordingly, the nanocellulose may increase the crystallization temperature of the biodegradable polyester resin composition according to an embodiment.

Since the nanocellulose has the characteristics, the biodegradable polyester resin composition according to an embodiment may have appropriate UV resistance.

Since the nanocellulose has the characteristics, the biodegradable polyester resin composition according to an embodiment may have an appropriate biodegradation rate.

Since the nanocellulose has the characteristics, the biodegradable polyester resin composition according to an embodiment may have an appropriate hydrolysis rate.

The biodegradable polyester resin composition according to an embodiment may include a metal salt.

The metal salt may be included in a content of about 0.1 ppm to about 1000 ppm based on the total weight of the biodegradable polyester resin composition according to an embodiment. The metal salt may be included in a content of about 1 ppm to about 500 ppm based on the total weight of the biodegradable polyester resin composition according to an embodiment. The metal salt may be included in a content of about 1 ppm to about 100 ppm based on the total weight of the biodegradable polyester resin composition according to an embodiment. The metal salt may be included in a content of about 1 ppm to about 50 ppm based on the total weight of the biodegradable polyester resin composition according to an embodiment.

The metal salt may be at least one selected from the group consisting of a nitrate, a sulfate, a hydrochloride, a carboxylate and the like. The metal salt may be at least one selected from the group consisting of titanium salt, silicon salt, sodium salt, calcium salt, potassium salt, magnesium salt, copper salt, iron salt, aluminum salt, silver salt and the like. The metal salt may be at least one selected from the group consisting of magnesium acetate, calcium acetate, potassium acetate, copper nitrate, silver nitrate, sodium nitrate, and the like.

The metal salt may include one or more selected from the group consisting of iron (Fe), magnesium (Mg), nickel (Ni), cobalt (Co), copper (Cu), palladium (Pd), zinc (Zn), vanadium (V), titanium, (Ti), indium ( In), manganese (Mn), silicon (Si) and tin (Sn).

In addition, the metal salt may be selected from the group consisting of acetate, nitrate, nitride, sulfide, sulfate, sulfoxide, hydroxide, hydrate, chloride, chlorinate and bromide.

Since the biodegradable polyester resin composition according to an embodiment includes the metal salt within the content, a hydrolysis rate and a biodegradation rate may be appropriately controlled.

The biodegradable polyester resin composition according to an embodiment may further include an anti-hydrolysis agent.

The anti-hydrolysis agent may be at least one selected from among silicone-based compounds such as silane, silazane and siloxane.

The anti-hydrolysis agent may include alkoxy silane. The anti-hydrolysis agent may include trimethoxy silane and/or triethoxy silane. The anti-hydrolysis agent may include an alkoxy silane including an epoxy group. The anti-hydrolysis agent may include at least one selected from the group consisting of 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane and 3-glycidoxypropyl triethoxysilane.

The anti-hydrolysis agent may be included in a content of about 1 ppm to about 10000 ppm in the biodegradable polyester resin composition according to an embodiment. The anti-hydrolysis agent may be included in a content of about 1 ppm to about 1000 ppm in the biodegradable polyester resin composition according to an embodiment. The anti-hydrolysis agent may be included in a content of about 5 ppm to 500 ppm in the biodegradable polyester resin composition according to an embodiment. The anti-hydrolysis agent may be included in a content of about 10 ppm to 300 ppm in the biodegradable polyester resin composition according to an embodiment.

The anti-hydrolysis agent may be bonded to the biodegradable polyester resin. The anti-hydrolysis agent may be chemically bonded to the biodegradable polyester resin. The anti-hydrolysis agent may be chemically bonded to a polymer included in the biodegradable polyester resin. The anti-hydrolysis agent may couple polymers included in the biodegradable polyester resin.

Since the biodegradable polyester resin composition according to an embodiment includes the anti-hydrolysis agent within the range, it may have appropriate hydrolysis resistance. In particular, since the biodegradable polyester resin according to an embodiment includes the anti-hydrolysis agent within the range, it may have appropriate initial hydrolysis characteristics and improved biodegradability.

Accordingly, the biodegradable polyester resin composition according to an embodiment may include a silicon element. The biodegradable polyester resin composition according to an embodiment may include the silicon element in a content of about 0.1 ppm to about 100 ppm. The biodegradable polyester resin composition according to an embodiment may include the silicon element in a content of about 0.1 ppm to about 50 ppm. The biodegradable polyester resin composition according to an embodiment may include the silicon element in a content of about 0.1 ppm to about 20 ppm.

In addition, the anti-hydrolysis agent may also react with a terminal carboxyl group or an unreacted carboxyl group. Accordingly, the biodegradable polyester resin composition according to an embodiment may have a low acid value.

In addition, the anti-hydrolysis agent may couple polymers included in the biodegradable polyester resin, so that the biodegradable polyester resin composition according to an embodiment may increase the ratio of high-molecular-weight polymers. Accordingly, the mechanical properties of the biodegradable polyester resin composition according to an embodiment may be improved.

The biodegradable polyester resin composition according to an embodiment may further include a chain extender.

The chain extender may include isocyanate.

The chain extender may be at least one selected from the group consisting of monofunctional isocyanate or polyfunctional isocyanate.

The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylene-bis(4-isocyanatocyclohexane).

The chain extender may include triisocyanate. The chain extender may include tri(4-isocyanatophenyl)methane.

The chain extender may include an acrylic polymer. The acrylic polymer may include an acryl group. The acryl group may be bonded to a main chain as a side chain. The acrylic polymer may include an epoxy group. The epoxy group may be bonded to the main chain as a side chain.

The chain extender may include a styrene-based polymer. The chain extender may include a styrene-based glycidyl acrylate.

The chain extender may be chemically bonded to the biodegradable polyester resin. The chain extender may be chemically bonded to a polymer included in the biodegradable polyester resin. The chain extender may be bonded to a terminal of the polymer included in the biodegradable polyester resin. In addition, the chain extender may be bonded to the terminals of three polymers included in the biodegradable polyester resin.

The chain extender may be included in a content of about 0.1 wt% to about 10 wt% in the biodegradable polyester resin composition according to an embodiment. The chain extender may be included in a content of about 0.2 wt% to about 8 wt% in the biodegradable polyester resin composition according to an embodiment. The chain extender may be included in a content of about 0.3 wt% to about 7 wt% in the biodegradable polyester resin composition according to an embodiment.

When the biodegradable polyester resin composition according to an embodiment includes the chain extender within the range, it may have appropriate hydrolysis resistance and appropriate biodegradability.

In addition, the chain extender may react with a terminal carboxyl group or an unreacted carboxyl group. Accordingly, the biodegradable polyester resin composition according to an embodiment may have a low acid value.

In addition, the chain extender couples polymers included in the biodegradable polyester resin, so that the biodegradable polyester resin composition according to an embodiment may increase the ratio of high-molecular-weight polymers. Accordingly, the mechanical properties of the biodegradable polyester resin composition according to an embodiment may be improved.

The biodegradable polyester resin composition according to an embodiment may be efficiently applied to packaging films and the like. That is, a film produced using the biodegradable polyester resin composition according to an embodiment may be used for general purposes such as packaging. In this case, since the biodegradable polyester resin composition according to an embodiment has a low initial hydrolysis degree, the biodegradable polyester film may maintain a certain level of mechanical and chemical properties during a typical period of use by the user.

In addition, since the biodegradable polyester resin composition according to an embodiment includes an oligomer having the characteristics described above, it may have a high late-stage hydrolysis degree. Accordingly, a film produced using the biodegradable polyester resin composition according to an embodiment may be easily decomposed when discarded after use.

In addition, since the biodegradable polyester resin composition according to an embodiment includes an oligomer having the characteristics described above, decomposition by ambient moisture and decomposition by microorganisms may complement each other. Accordingly, the biodegradable polyester resin composition according to an embodiment may have a low initial hydrolysis degree while exhibiting high biodegradability.

In addition, since the biodegradable polyester resin composition according to an embodiment includes an oligomer having the characteristics described above, it may have a biodegradability of about 1.5 or more per aliphatic carboxylic acid. That is, the biodegradable polyester resin composition according to an embodiment exhibits high biodegradability even with a low content of aliphatic carboxylic acids.

Accordingly, since the biodegradable polyester resin composition according to an embodiment has a relatively high content of aromatic carboxylic acids, it may exhibit high initial resistance to hydrolysis while maintaining high biodegradability at a later stage.

The biodegradable polyester resin composition according to an embodiment may maintain a certain level or more of mechanical and chemical properties during the user's period of use. At the same time, since the biodegradable polyester resin composition according to an embodiment has a high late-stage hydrolysis degree, it may be easily decomposed in rivers or oceans. That is, the biodegradable polyester resin composition according to an embodiment may help solve environmental issues such as the marine plastic problem.

The biodegradable polyester resin composition according to an embodiment may include a heat stabilizer. The heat stabilizer may be a phosphorus-based heat stabilizer.

The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

In addition, the heat stabilizer may be an antioxidant having an antioxidant function.

The content of the heat stabilizer may be about 3000 ppm or less based on the total weight of the biodegradable polyester resin. The content of the heat stabilizer may be, for example, 10 ppm to 3,000 ppm, 20 ppm to 2,000 ppm, 20 ppm to 1,500 ppm or 20 ppm to 2,000 ppm based on the total weight of the biodegradable polyester resin. When the content of the heat stabilizer satisfies the range, the deterioration of the polymer due to high temperature during the reaction process may be controlled so that terminal groups of the polymer may be reduced and the color may be improved. In addition, the heat stabilizer may suppress the activation of a titanium-based catalyst, thereby controlling a reaction rate.

The biodegradable polyester resin composition according to an embodiment may include an elongation improver. Examples of the elongation improver include oil such as paraffin oil, naphthenic oil, or aromatic oil, or adipate such as dibutyl adipate, diethylhexyl adipate, dioctyl adipate, or diisopropyl adipate.

The elongation improver may be included in the biodegradable polyester resin composition according to an embodiment in a content of about 0.001 parts by weight to about 1 part by weight based on 100 parts by weight of the biodegradable polyester resin. The elongation improver may be included in a content of about 0.01 parts by weight to about 1 part by weight based on 100 parts by weight of the biodegradable polyester resin in the biodegradable polyester resin composition according to an embodiment.

Since the elongation improver is included within the above-described range, the biodegradable polyester resin composition according to the embodiment may have improved mechanical properties.

The biodegradable polyester resin composition according to an embodiment may include an inorganic filler. The inorganic filler may be at least one selected from the group consisting of calcium sulfate, barium sulfate, talc, talc powder, bentonite, kaolinite, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

In particle diameter distribution obtained by laser diffraction for the inorganic filler, a cumulative 50% particle size ($D_{50}$) based on volume may be about 100 μm or less, about 85 μm or less, about 70 μm or less, about 50 μm or less, about 25 μm or less, about 10 μm or less, about 5 μm or less, about 3 μm or less or about 1 μm or less.

In addition, the specific surface area of the inorganic filler may be about 100 $m^2/g$ or more. For example, the specific surface area of the inorganic filler may be about 100 $m^2/g$ or more, about 105 $m^2/g$ or more or about 110 $m^2/g$ or more.

The inorganic filler may be included in the biodegradable polyester resin composition according to an embodiment in a content of about 3 parts by weight to about 50 parts by weight based on 100 parts by weight of the biodegradable polyester resin. The inorganic filler may be included in the biodegradable polyester resin composition according to an embodiment in a content of about 5 parts by weight to about 30 parts by weight based on 100 parts by weight of the biodegradable polyester resin.

The inorganic filler may be included in a content of about 3,000 ppm or less based on the total weight of the biodegradable polyester resin composition according to an embodiment. For example, the content of the inorganic filler may be about 3,000 ppm or less, about 1,500 ppm or less, about 1,200 ppm or less, about 800 ppm or less or about 600 ppm or less, particularly about 50 ppm or more, about 100 ppm or more, about 130 ppm or more, about 150 ppm or more or about 180 ppm or more based on the total weight of the biodegradable polyester resin composition according to an embodiment.

Since the biodegradable polyester resin composition according to an embodiment includes the inorganic filler within the range, the biodegradable polyester resin composition according to an embodiment may have mechanical properties, appropriate UV resistance, an appropriate biodegradation rate and an appropriate hydrolysis rate.

The biodegradable polyester resin composition according to an embodiment may further include a heterogeneous biodegradable resin. The biodegradable polyester resin composition according to an example may be a composite resin composition including two or more types of resins, a filler and an additive.

The heterogeneous biodegradable resin may be at least one selected from the group consisting of polybutylene azelate terephthalate (PBAzT), polybutylene sebacate terephthalate (PBSeT) and polybutylene succinate terephthalate (PBST), polyhydroxyalkanoate (PHA) or polylactic acid (PLA).

The heterogeneous biodegradable resin may be included in the biodegradable polyester resin composition according to an embodiment in a content of about 10 parts by weight to about 100 parts by weight based on 100 parts by weight of the biodegradable polyester resin. The heterogeneous biodegradable resin may be included in the biodegradable polyester resin composition according to an embodiment in a content of about 10 parts by weight to about 60 parts by weight based on 100 parts by weight of the biodegradable polyester resin. The heterogeneous biodegradable resin may be included in the biodegradable polyester resin composition according to an embodiment in a content of about 20 parts by weight to about 50 parts by weight based on 100 parts by weight of the biodegradable polyester resin.

The heterogeneous biodegradable resin may supplement the mechanical, optical and chemical properties of the biodegradable polyester resin. Since the biodegradable polyester resin composition according to an embodiment includes the heterogeneous biodegradable resin in the content, the biodegradable polyester resin composition according to an

embodiment may have mechanical properties, appropriate UV resistance, an appropriate biodegradation rate and an appropriate hydrolysis rate.

In addition, the number of carboxyl terminal groups of the biodegradable polyester resin composition according to an embodiment may be about 50 eq/ton or less. For example, the number of the carboxyl terminal groups of the biodegradable polyester resin according to an embodiment may be about 50 eq/ton or less, about 48 eq/ton or less, about 45 eq/ton or less or about 42 eq/ton or less. When the number of the carboxyl terminal groups is adjusted to the range, deterioration may be prevented and improved mechanical properties may be implemented when the biodegradable polyester resin composition according to an embodiment is extruded to form a molded article.

In addition, the intrinsic viscosity (IV) of the biodegradable polyester resin composition according to an embodiment may be about 0.9 dl/g or more. The intrinsic viscosity of the biodegradable polyester resin composition according to an embodiment may be about 0.95 dl/g or more, about 1.0 dl/g or more, about 1.1 dl/g or more, about 1.2 dl/g or more or about 1.3 dl/g or more. The intrinsic viscosity of the biodegradable polyester resin composition according to an embodiment may be about 0.95 dl/g to about 1.7 dl/g. The intrinsic viscosity of the biodegradable polyester resin composition according to an embodiment may be about 1.3 dl/g to about 1.7 dl/g. The intrinsic viscosity of the biodegradable polyester resin composition according to an embodiment may be about 1.4 dl/g to about 1.7 dl/g.

A process of preparing the biodegradable polyester resin composition according to an embodiment is as follows.

Referring to FIG. 1, an apparatus for producing the biodegradable polyester resin includes a slurry stirrer 100, an esterification part 200, a polycondensation reaction part 300, a posttreatment part 400, a first recovery part 510 and a second recovery part 520.

A method of preparing the biodegradable polyester resin includes a step of preparing a first raw material composition including the diol and the aromatic dicarboxylic acid.

The first raw material composition may be prepared as a slurry including the diol and the aromatic dicarboxylic acid.

The step of preparing a slurry includes a step of mixing and processing the diol and the aromatic dicarboxylic acid. That is, the step of preparing a slurry is a pretreatment step before an esterification and may be a step of mixing the diol and the aromatic dicarboxylic acid and slurrying the mixture.

The temperature of the slurry of the diol and the aromatic dicarboxylic acid may be about 5°C to about 45°C higher than the melting point of the diol. For example, when the diol is 1,4-butanediol, the temperature of the slurry may be about 35°C to about 70°C.

The diol and the aromatic dicarboxylic acid are fed into and stirred in the slurry stirrer 100, thereby preparing the slurry.

By mixing, pre-treating, and slurrying the diol and the aromatic dicarboxylic acid, the diol and the aromatic dicarboxylic acid may be uniformly reacted and the speed of an esterification may be effectively accelerated, thereby increasing reaction efficiency.

In particular, when an aromatic dicarboxylic acid, such as terephthalic acid, has complete crystallinity and is in powder form, it may be difficult to cause a homogeneous reaction due to very low solubility in the diol. Therefore, the slurrying pretreatment process may play a very important role in providing a biodegradable polyester resin, sheet, film and molded article having excellent properties according to an embodiment of the present invention and improving reaction efficiency.

When the aromatic dicarboxylic acid is terephthalic acid, the terephthalic acid is a white crystal that has complete crystallinity and sublimes at around 300°C under atmospheric pressure without a melting point. In addition, the terephthalic acid has very low solubility in the diol, making it difficult for a homogeneous reaction to occur. Accordingly, when a pretreatment process is performed before an esterification, a uniform reaction may be induced by increasing the surface area for reacting with a diol in a solid matrix of terephthalic acid.

In addition, when the aromatic dicarboxylic acid is dimethyl terephthalate, the dimethyl terephthalate may be made into a molten state at about 142°C to 170°C by the pretreatment process and reacted with the diol, so that an esterification can be proceeded faster and more efficiently.

Meanwhile, in the pretreatment step of preparing the slurry, the structure and properties of the biodegradable polyester resin may vary depending on the particle size, particle size distribution, pretreatment reaction conditions, and the like of the aromatic dicarboxylic acid.

For example, the aromatic dicarboxylic acid may include terephthalic acid, and the terephthalic acid may have an average particle diameter (D50) of 10 μm to 400 μm measured by a particle size analyzer Microtrac S3500 in a particle size distribution (PSD), and a standard deviation of the average particle diameter (D50) may be 100 or less. The standard deviation means the square root of the variance. The average particle diameter (D50) of the terephthalic acid may be for example 20 μm to 200 μm, for example 30 μm to 200 μm, or for example 100 μm to 160 μm. When the average particle diameter (D50) of the terephthalic acid satisfies the range, it may be more advantageous in terms of the solubility improvement of the diol and the reaction rate.

In the pretreatment process, the diol and the aromatic dicarboxylic acid may be mixed and fed into the slurry stirrer

(tank) 100.

The slurry stirrer 100 may be provided with, for example, an anchor-type bottom, a height to the agitator of 20 mm or more, and three or more rotary blades, which may be more advantageous to achieve an efficient stirring effect.

For example, the slurry stirrer 100 has a height of 20 mm or more to the agitator, i.e., the reactor and the bottom of the agitator may be almost attached to each other. In this case, a slurry may be obtained without precipitation. If the shape, shape and rotary blades of the agitator do not satisfy the conditions, the aromatic dicarboxylic acid may precipitate to the bottom when the diol and the aromatic dicarboxylic acid are mixed in an initial period. In this case, phase separation may occur.

The pretreatment step of preparing the slurry may include a step of mixing the diol and the aromatic dicarboxylic acid and stirring the mixture about 50 rpm to about 200 rpm at about 30°C to about 100°C for 10 minutes or more, for example 10 minutes to 200 minutes.

The diol may have characteristics as described above.

The diol may be added at one time or dividedly. For example, the diol may be added dividedly when mixing with an aromatic dicarboxylic acid and when mixing with an aliphatic dicarboxylic acid.

The aromatic dicarboxylic acid may have characteristics as described above.

In the pretreatment step of preparing the slurry, a molar ratio of the diol to the aromatic dicarboxylic acid may be about 0.8:1 to about 2:1. In the pretreatment step of preparing the slurry, a molar ratio of the diol to the aromatic dicarboxylic acid may be about 1.1:1 to about 1.5:1. In the pretreatment step of preparing the slurry, a molar ratio of the diol to the aromatic dicarboxylic acid may be about 1.2:1 to about 1.8:1. In the pretreatment step of preparing the slurry, a molar ratio of the diol to the aromatic dicarboxylic acid may be about 1.25:1 to about 1.6:1.

When the diol is added in a larger amount than the aromatic dicarboxylic acid, the aromatic dicarboxylic acid may be easily dispersed.

In addition, an additive may be added to the slurry. The nanocellulose and/or the metal salt may be added in the form of a dispersion or solution to the slurry.

In the method of preparing the biodegradable polyester resin composition, a prepolymer is obtained by esterification using a slurry obtained by mixing and pretreating a diol and an aromatic dicarboxylic acid, and the prepolymer is condensation-polymerized, so that the desired structure and physical properties of the biodegradable polyester resin according to the embodiment of the present invention may be efficiently achieved.

The first raw material composition may have a viscosity of about 300 cP to about 1000 cP at about 35°C. The first raw material composition may have a viscosity of about 400 cP to about 900 cP at about 35°C.

Since the first raw material composition has a viscosity in the above ranges, an esterification reaction may be effectively performed.

The method of preparing the biodegradable polyester resin composition according to an embodiment includes a step of preparing a second raw material composition including the aliphatic dicarboxylic acid. The second raw material composition may include the diol and the aliphatic dicarboxylic acid.

In the second raw material composition, a molar ratio of the diol to the aliphatic dicarboxylic acid may be about 1.2:1 to about 1.6:1. In the second raw material composition, a molar ratio of the diol to the aliphatic dicarboxylic acid may be about 1.25:1 to about 1.5:1.

In addition, the second raw material composition may have a viscosity of about 300 cP to about 1000 cP at about 35°C. The second raw material composition may have a viscosity of about 500 cP to about 1000 cP at about 35°C.

Since the second raw material composition has a molar ratio and viscosity in the above ranges, an esterification reaction may be effectively performed.

The method of preparing the biodegradable polyester resin may include a step of esterifying the first raw material composition and the second raw material composition to prepare a prepolymer. The first raw material composition and the second raw material composition may be reacted in the ester supply line.

In the esterification reaction, the reaction time may be shortened by using the first raw material composition and the second raw material composition. For example, the slurry obtained in the pretreatment step may shorten the reaction time of the esterification and the reaction time of a condensation polymerization described below.

The esterification reaction may be performed at least once.

In an embodiment, the esterification reaction may be performed batchwise after adding the second raw material composition to the first raw material composition. That is, the first raw material composition may be fed into the esterification supply line and the second raw material composition may be fed into the esterification supply line to perform the esterification reaction.

The second raw material composition may be added to the first raw material composition in the form of a slurry.

The esterification reaction may be performed at about 250°C or less for about 0.5 hours to about 6 hours. Specifically, the esterification reaction may be performed at about 180°C to about 250°C, about 185°C to about 240°C or about 200°C to about 240°C under normal or reduced pressure until water as a by-product theoretically reaches 95%. For example, the esterification reaction may be performed for 0.5 hours to 5.5 hours, 0.5 hours to 4.5 hours or 2 hours to 5

hours, but the present invention is not limited thereto.

In the esterification, the total number of moles of the diols introduced may be about 1.0 to about 1.8 relative to the total number of moles of the aromatic dicarboxylic acid and the aliphatic dicarboxylic acid. In the esterification, the total number of moles of the diols introduced may be about 1.1 to about 1.6 relative to the total number of moles of the aromatic dicarboxylic acid and the aliphatic dicarboxylic acid.

In addition, the temperature of a second raw material composition including the diol and the aliphatic dicarboxylic acid may be about 5°C to about 40°C higher than the melting point of the diol.

In addition, various additives such as the nanocellulose may also be added to the slurry of the diol and the aliphatic dicarboxylic acid.

In one embodiment, after the first raw material composition is introduced into the esterification part, a first esterification may be carried out. In addition, after the first esterification, the second raw material composition may be introduced into the esterification part, and a second esterification may be carried out together with the product of the first esterification.

The first esterification may be performed at 250°C or less for 0.25 hours to 4 hours. Specifically, the first esterification may be performed at 180°C to 250°C, 185°C to 240°C or 200°C to 240°C under normal pressure or reduced pressure until the theoretical amount of water as a by-product reaches 95%. For example, the first esterification may be performed for 0.25 hours to 4 hours, 0.25 hours to 3.5 hours or 1.5 hours to 3 hours, but is not limited thereto.

The second esterification may be performed for 0.25 hours to 3.5 hours at about 250°C or less. Specifically, the second esterification may be performed at 180°C to 250°C, 185°C to 240°C or 200°C to 240°C under normal pressure or reduced pressure until the theoretical amount of water as a by-product reaches 95%. For example, the second esterification may be performed for 0.5 hours to 3 hours, 1 hour to 2.5 hours or 1.5 hours to 3 hours, but is not limited thereto.

In the first esterification and the second esterification, the number ratio, etc. of the first block and the second block may be controlled by adjusting the reaction temperature and the reaction time, respectively. In addition, when the esterification is divided into the first esterification and the second esterification, the overall esterification may be precisely controlled. Accordingly, when the esterification is divisionally performed, the reaction stability and reaction uniformity of the esterification may be improved.

The number average molecular weight of the prepolymer may be about 500 to about 10000 g/mol. For example, the number average molecular weight of the prepolymer may be about 500 to about 8500 g/mol, about 500 to about 8000 g/mol, about 500 to about 7000 g/mol, about 500 g/mol to about 5000 g/mol, or about 1500 g/mol to about 4000 g/mol. When the number average molecular weight of the prepolymer satisfies the range, the molecular weight of a polymer in a polycondensation reaction may be efficiently increased.

The number average molecular weight may be measured using gel permeation chromatography (GPC). Specifically, data obtained by gel permeation chromatography includes various items such as Mn, Mw and Mp. Thereamong, the molecular weight may be measured based on the number average molecular weight (Mn).

The reinforcing material, the branching agent, and/or the metal salt may be added together with the slurry before the esterification. The reinforcing material, the branching agent, and/or the metal salt may be fed into an esterification part 200 in the middle of the esterification. The reinforcing material, the branching agent, and/or the metal salt may be added to the esterification product after the esterification. In addition, the reinforcing material, the branching agent, and/or the metal salt may be added together with the aliphatic dicarboxylic acid. In addition, the reinforcing material, the branching agent, and/or the metal salt may be fed into the esterification part 200 after the first esterification and before the second esterification.

Since the reinforcing material and/or the metal salt is added during the esterification, the reinforcing material and/or the metal salt may be uniformly dispersed in the biodegradable polyester resin.

The reinforcing material may have the above-described characteristics. In particular, the nanocellulose may be used as the reinforcing material.

The nanocellulose may be pre-treated by a bead mill, pre-treated by ultrasonic waves, or pre-treated by high-speed dispersion at about 1000 rpm to about 1500 rpm before being introduced. Specifically, the nano-cellulose may be water-dispersed nano-cellulose pre-treated with a bead mill or pre-treated with ultrasonic waves.

First, the bead mill pretreatment may be performed with a vertical mill or horizontal mill as a wet milling device. The horizontal mill is preferable in that the amount of beads that can be filled into a chamber is larger, and the uneven wear of the machine is reduced, the wear of the beads is reduced, and maintenance is easier, but is not limited thereto.

The bead mill pretreatment may be performed using one or more bead types selected from the group consisting of zirconium, zircon, zirconia, quartz and aluminum oxide.

Specifically, the bead mill pretreatment may be performed using beads having a diameter of about 0.3 mm to about 1 mm. For example, the diameter of the beads may be about 0.3 mm to about 0.9 mm, about 0.4 mm to about 0.8 mm, about 0.45 mm to about 0.7 mm or about 0.45 mm to about 0.6 mm.

When the diameter of the beads satisfies the range, the dispersibility of nanocellulose may be further improved. When the diameter of the beads exceeds the range, the average particle diameter and average particle deviation of

nanocellulose increase, resulting in low dispersibility.

In addition, in the bead mill pretreatment, it is preferable to use beads with a higher specific gravity than that of nanocellulose in that sufficient energy can be delivered. For example, the beads may be one or more selected from the group consisting of zirconium, zircon, zirconia, quartz and aluminum oxide which have a higher specific gravity than water-dispersed nanocellulose, and zirconium beads having a specific gravity four times or higher than the water-dispersed nanocellulose are preferred, without being not limited thereto.

In addition, the ultrasonic pretreatment is a method of physically closing or pulverizing nanoparticles with waves generated by emitting 20 kHz ultrasound into a solution.

The ultrasonic pretreatment may be performed for less than 30 minutes at an output of 30000 J/s or less. For example, the ultrasonic pretreatment may be performed at an output of 25000 J/s or less or 22000 J/s or less for 25 minutes or less, 20 minutes or less or 18 minutes or less. When the output and the execution time satisfy the above ranges, the effect, i.e., the improvement of dispersibility, of the ultrasonic pretreatment may be maximized. When the energy amount exceeds the above range, the nanoparticles may rather re-agglomerate and the dispersibility may be lowered.

The nanocellulose according to an embodiment may be pre-treated with a bead mill or pre-treated with ultrasonic waves. Alternatively, the nanocellulose according to an embodiment may be pre-treated with a bead mill and pre-treated with ultrasonic waves. Here, it is preferred to perform ultrasonic pretreatment after pre-treating with a bead mill in terms of improving dispersibility by preventing re-agglomeration.

The nanocellulose according to an embodiment may be pre-treated with a bead mill or pre-treated with ultrasonic waves. Alternatively, the nanocellulose according to an embodiment may be pre-treated with a bead mill and pre-treated with ultrasonic waves. Here, it is preferred to perform ultrasonic pretreatment after pretreatment with a bead mill in terms of improving dispersibility by preventing reagglomeration.

Since the nanocellulose includes an ion-bonded metal, it has very high dispersibility in water. In addition, an aqueous dispersion having a very high dispersion of the nanocellulose may be obtained by the bead mill pretreatment and/or the ultrasonic pretreatment. In the aqueous nanocellulose dispersion, the content of the nanocellulose may be about 0.5 wt% to about 50 wt%. In the aqueous nanocellulose dispersion, the content of the nanocellulose may be about 0.5 wt% to about 20 wt%. In the aqueous nanocellulose dispersion, the content of the nanocellulose may be about 0.5 wt% to about 10 wt%. In the aqueous nanocellulose dispersion, the content of the nanocellulose may be about 0.5 wt% to about 5 wt%.

In the esterification, a titanium-based catalyst and/or a germanium-based catalyst may be used. Specifically, the titanium-based catalyst and/or the germanium-based catalyst may be added to the slurry, and the esterification may be performed.

In addition, the titanium-based catalyst and/or the germanium-based catalyst may be added to the slurry before the first esterification, and the titanium-based catalyst and/or the germanium-based catalyst may be further added to the product of the first esterification.

The biodegradable polyester resin may include one or more titanium-based catalysts selected from the group consisting of titanium isopropoxide, antimony trioxide, dibutyltin oxide, tetrapropyl titanate, tetrabutyl titanate, tetraisopropyl titanate, antimonia acetate, calcium acetate and magnesium acetate, or one or more germanium-based catalysts selected from the group consisting of germanium oxide, germanium methoxide, germanium ethoxide, tetramethyl germanium, tetraethyl germanium and germanium sulfide.

In addition, the content of the catalyst may be about 100 ppm to 1000 ppm based on a total weight of a diol, an aromatic dicarboxylic acid, and an aliphatic dicarboxylic acid. For example, about 100 ppm to about 800 ppm, about 150 ppm to about 700 ppm, about 200 ppm to about 600 ppm or about 250 ppm to about 950 ppm of titanium-based catalyst or germanium-based catalyst may be included. When the content of the catalyst satisfies the range, the physical properties may be further improved.

In addition, the heat stabilizer may be added together with the slurry before the esterification. The heat stabilizer may be fed into the esterification part 200 in the middle of the esterification. The heat stabilizer may be added to the esterification product after the esterification. In addition, the heat stabilizer may be added together with the aliphatic dicarboxylic acid. In addition, the heat stabilizer may be fed into the esterification part 200 after the first esterification and before the second esterification.

The characteristics of the heat stabilizer may be as described above.

The content of the heat stabilizer may be 3,000 ppm or less based on a total weight of a diol, an aromatic dicarboxylic acid, and an aliphatic dicarboxylic acid. Specifically, the content of the heat stabilizer may be, for example, 10 ppm to 3,000 ppm, 20 ppm to 2,000 ppm, 20 ppm to 1,500 ppm or 20 ppm to 200 ppm based on a total weight of a diol, an aromatic dicarboxylic acid, and an aliphatic dicarboxylic acid. When the content of the heat stabilizer satisfies the range, the deterioration of the polymer due to high temperature during the reaction process may be controlled, the terminal groups of the polymer may be reduced and the color may be improved.

After completion of the esterification, one or more selected from the group consisting of an additive such as silica, potassium or magnesium and a color-correcting agent such as cobalt acetate may be further added to the esterification

product. That is, after completion of the esterification, the additive and/or the color-correcting agent may be added and stabilized, and then a polycondensation reaction may be performed. The additive and/or the color-correcting agent may be added after completion of the esterification, and may be fed into the polycondensation reaction part 300 together with the prepolymer. Accordingly, the additive and/or the color-correcting agent may be uniformly dispersed in the biodegradable polyester resin.

In addition, after completion of the esterification, the inorganic filler may be added to the esterification product. That is, the inorganic filler is added and stabilized after completion of the esterification, and then the polycondensation reaction may be performed. The characteristics of the inorganic filler are as described above. The inorganic filler may be fed into the polycondensation reaction part 300 together with the prepolymer, and the condensation polymerization process may be performed. Accordingly, the inorganic filler may be uniformly dispersed in the biodegradable polyester resin.

In addition, the first recovery part 510 recovers by-products such as water from the esterification part 200. The first recovery part 510 may recover by-products generated from the esterification by applying vacuum pressure to the esterification part 200 or proceeding with reflux.

The method of preparing the biodegradable polyester resin includes a step of polycondensing the prepolymer. The polycondensation reaction may be performed as follows.

The prepolymer is fed into the polycondensation reaction part 300. In addition, at least one of the reinforcing material, the heat stabilizer, the color-correcting agent, the inorganic filler, the metal salt and other additives may be fed into the polycondensation reaction part 300 together with the prepolymer.

In addition, the prepolymer may be introduced into the polycondensation reaction part, and the polycondensation reaction of the prepolymer may be carried out.

The polycondensation reaction may be performed at about 180°C to about 280°C and about 10 torrs or less for about 1 hour to about 5 hours. For example, the polycondensation reaction may be performed at about 190°C to about 270°C, about 210°C to about 260°C or about 230°C to about 255°C under about 0.9 torrs or less, about 0.7 torrs or less, about 0.2 torrs to about 10 torr, about 0.2 torrs to about 0.9 torrs or about 0.2 torrs to about 0.6 torrs for about 1.5 hours to about 5 hours, about 2 hours to about 5 hours or about 2.5 hours to about 4.5 hours.

In addition, the polycondensation reaction may include first polycondensation and second polycondensation.

For example, the first polycondensation may be performed at about 260°C or less, about 250°C or less, about 215°C to about 250°C, about 215°C to about 245°C or about 230°C to about 245°C under about 1 torr to about 200 torr, about 2 torrs to about 100 torr, about 4 torrs to about 50 torr, about 5 torrs to about 45 torrs or about 8 torrs to about 32 torrs for about 0.5 hours to about 3.5 hours, about 0.5 hours to about 3.0 hours or about 0.5 hours to about 2.8 hours.

In addition, the second polycondensation may be performed at about 220°C to about 265°C, about 230°C to about 260°C or about 235°C to about 255°C under about 1 torr or less, about 0.8 torrs or less, about 0.6 torrs or less, about 0.1 torr to about 1 torr, about 0.2 torrs to about 0.8 torrs or about 0.2 torrs to about 0.6 torrs for about 0.5 hours to about 4 hours, about 1 hour to about 3.5 hours or about 1.5 hours to about 3.5 hours.

In addition, before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the prepolymer.

The number average molecular weight of the polymer may be about 30000 g/mol or more. For example, the number average molecular weight of the polymer may be about 33000 g/mol or more, about 45000 g/mol or more or about 30000 g/mol to about 120000 g/mol. When the number average molecular weight of the polymer satisfies the range, physical properties, impact resistance, durability and moldability may be further improved.

In addition, the second recovery part 520 recovers by-products such as water from the polycondensation reaction part 300. The second recovery part 520 may apply vacuum pressure to the polycondensation reaction part 300, and may recover by-products generated in the polycondensation reaction.

The second recovery part 520 may apply a vacuum pressure of about 0.1 torrs to about 1 torr to the inside of the polycondensation reaction part 300. The second recovery part 520 may apply a vacuum pressure of about 0.1 torrs to about 0.9 torrs to the inside of the polycondensation reaction part 300.

Next, the anti-hydrolysis agent and/or the chain extender are added to the polymer. Next, the polymer, the anti-hydrolysis agent and the chain extender are uniformly mixed and allowed to stand at about 200°C to about 260°C for about 1 minute to about 15 minutes. Accordingly, the polymer reacts with the anti-hydrolysis agent and/or the chain extender.

Alternatively, the anti-hydrolysis agent and/or the chain extender may be fed into the polycondensation reaction part 300 through a static mixer and reacted with the polymer. A reaction temperature of the anti-hydrolysis agent and/or the chain extender in the polycondensation reaction part 300 may be about 200°C to about 260°C. In addition, a reaction time of the anti-hydrolysis agent and/or the chain extender in the polycondensation reaction part 300 may be about 1 minute to

about 15 minutes.

The anti-hydrolysis agent may have the characteristics described above.

The chain extender may have the characteristics described above.

Accordingly, the biodegradable polyester resin composition according to an embodiment may have appropriate hydrolysis and a high biodegradability degree.

Next, a pellet may be produced from the polymer.

Specifically, the pellet may be produced by cooling the polymer to about 15°C or less, about 10°C or less or about 6°C or less, and then cutting the cooled polymer. Alternatively, the polymer may be cut at about 40°C to about 60°C.

The cutting step may be performed using any pellet cutting machine used in the art without limitation, and the pellet may have various shapes. The pellet cutting method may include an underwater cutting method or a strand cutting method.

The pellet may be subjected to an additional post-treatment process. The pellet may be fed into the post-treatment part 400, and the post-treatment process may be performed.

The post-treatment process may be performed in the post-treatment part 400. The pellet is fed into the post-treatment part 400. Next, the post-treatment part 400 may melt and re-extrude the fed pellet by frictional heat. That is, the post-treatment part 400 may include an extruder such as a twin-screw extruder.

The temperature of the post-treatment process may be about 140°C to about 250°C. The temperature of the post-treatment process may be about 130°C to about 240°C. The temperature of the post-treatment process may be about 140°C to about 235°C. The temperature of the post-treatment process may be about 135°C to about 230°C.

The post-treatment process time may be about 30 seconds to about 3 minutes. The post-treatment process time may be about 50 seconds to about 2 minutes. The post-treatment process time may be about 1 minute to about 2 minutes.

Next, A resin extruded by the extruder may be cooled, cut, and processed into post-treated pellets. That is, the resin extruded from the extruder may be reprocessed into a pellet through the cutting step described above.

Crystallinity of the pellet may be improved in the post-treatment process. In addition, the content of the residue included in the pellet may be adjusted in the post-treatment process. In particular, the content of an oligomer contained in the pellet may be controlled by the post-treatment process. The amount of residual solvent contained in the pellet may be controlled by the post-treatment process. The elongation improver contained in the pellet may be controlled by the post-treatment process.

Accordingly, the post-treatment process may appropriately control the mechanical properties, biodegradability, UV resistance, optical properties, or hydrolysis resistance of the biodegradable polyester resin.

After the pellet is produced, the biodegradable polyester resin may be compounded with the heterogeneous biodegradable resin. In addition, at least one of the inorganic filler, the light stabilizer, the color-correcting agent, the elongation improver and the other additives may be compounded with the biodegradable polyester resin and the heterogeneous biodegradable resin.

The compounding process is as follows.

The biodegradable polyester resin and the heterogeneous biodegradable resin are mixed with at least one of the inorganic filler, the heat stabilizer, the color-correcting agent, the metal salt or the other additives and fed into an extruder. The mixed biodegradable polyester resin composition is melted and mixed at about 120°C to about 260°C in the extruder. Next, the melt-mixed biodegradable polyester resin composition is extruded, cooled, cut, and re-pelletized. By this process, the biodegradable polyester resin composition according to an embodiment may be prepared by combining it with the heterogeneous biodegradable resin.

By the biodegradable polyester resin according to an embodiment, a biodegradable polyester film may be prepared.

The thickness of the biodegradable polyester film may be about 5 $\mu$m to about 300 $\mu$m4. For example, the thickness of the biodegradable polyester film may be about 5 $\mu$m to about 180 $\mu$m, about 5 $\mu$m to about 160 $\mu$m, about 10 $\mu$m to about 150 $\mu$m, about 15 $\mu$m to about 130 $\mu$m, about 20 $\mu$m to about 100 $\mu$m, about 25 $\mu$m to about 80 $\mu$m or about 25 $\mu$m to about 60 $\mu$m.

The biodegradable polyester film according to an embodiment may have substantially the same hydrolysis degree and biodegradability as the biodegradable polyester resin composition described above.

Meanwhile, the biodegradable polyester film may be prepared using the biodegradable polyester resin or a biodegradable polyester resin pellet.

Specifically, the method of preparing the biodegradable polyester film may include a step of preparing a biodegradable resin composition according to an example and a step of drying and melt extruding the biodegradable resin composition.

In the step of drying and melt extruding the biodegradable polyester resin composition, the drying may be performed at about 60°C to about 100°C for about 2 hours to about 12 hours. Specifically, the drying may be performed at about 65°C to about 95°C, about 70°C to about 90°C or about 75°C to about 85°C for about 3 hours to about 12 hours or about 4 hours to about 10 hours. When the drying conditions of the pellet satisfy the ranges, the quality of a produced

biodegradable polyester film or molded article may be further improved. The moisture content of the biodegradable polyester resin composition after the drying step may be not more than about 500 ppm, based on the total weight of the biodegradable polyester resin composition.

In the drying and melt extruding step, the melt extruding may be performed at about 250°C or less. For example, the melt extruding may be performed at about 245°C or less, about 220°C or less, about 215°C or less, about 100°C to about 250°C, about 120°C to about 245°C or about 130°C to about 215°C. The melt extruding may be performed by a blown film process.

Biodegradable polyester molded article

A biodegradable polyester molded article may be manufactured using the biodegradable polyester resin.

Specifically, the molded article may be manufactured by molding the biodegradable polyester resin composition in a method, such as extrusion or injection, known in the art, and the molded article may be an injection-molded article, an extrusion-molded article, a thin-film molded product, a blow molding or blow-molded article, 3D filament, an interior material for construction, or the like, but is not limited thereto.

For example, the molded article may be in the form of a film or sheet that can be used as an agricultural mulching film, disposable gloves, a disposable film, a disposable bag, a food packaging material, a volume-rate garbage bag, etc., and may be in the form of a fiber that can be used as woven, knitted, non-woven, or a rope. In addition, as shown in FIG. 2, the molded article may be in the form of a disposable container 10 that can be used as a container for packaging food such as a lunch box. In addition, the molded article may be a molded article in various forms such as a disposable straw, a cutlery (spoon), a food plate, or a fork.

In particular, since the molded article may be formed from the biodegradable polyester resin capable of improving physical properties such as shock absorption energy and hardness, in particular, impact resistance and durability, it may exhibit excellent properties when applied to packaging materials for products stored and transported at low temperatures, interior materials for automobiles requiring durability, garbage bags, mulching films, and disposable products.

The biodegradability of the biodegradable polyester resin composition according to an embodiment may be measured by the following method.

To measure the biodegradability, the biodegradable resin composition according to an embodiment was mixed with compost, and an accelerated biodegradation test was performed at 60°C and a humidity of 90%. After a certain time, gel permeation chromatography (GPC) was used to measure the number average molecular weight of the first biodegradable polyester resin composition according to an embodiment. The biodegradability was derived by dividing a difference between an initial number average molecular weight and a number average molecular weight after biodegradation for a certain time by the initial number average molecular weight.

The biodegradability may be represented by Equation 4 below:

[Equation 4]

$$\text{Biodegradability (\%)} = \frac{\text{Initial number average molecular weight - Number average molecular weight after biodegradation}}{\text{Initial number average molecular weight}} \times 100$$

Here, the biodegradable polyester resin composition according to an embodiment is mixed with compost and subjected to an accelerated biodegradation test at a temperature of 60°C and a humidity of 90% for a certain time. The initial number average molecular weight of the biodegradable polyester resin composition before performing an accelerated biodegradation test and the number average molecular weight of the biodegradable polyester resin composition that has been subjected to the accelerated biodegradation test for a certain time were measured by gel permeation chromatography (GPC).

The biodegradability was derived by dividing a difference between an initial number average molecular weight and a number average molecular weight after biodegradation for a certain time by the initial number average molecular weight.

In addition, the compost may include about 40 wt% of pig manure, about 15 wt% of chicken manure, about 37 wt% of sawdust, about 5 wt% of zeolite and about 3 wt% of a microbial agent.

In addition, the manufacturer of the compost is Taeheung F&G, and the product name of the compost is Geosaengto (grade 1 compost by-product fertilizer).

In addition, to measure the biodegradability, the biodegradable polyester resin composition according to an

embodiment is manufactured into a sheet having a thickness of about 300 $\mu$m. Next, the manufactured sheet is cut into a size of about 30 mm×30 mm to produce flakes. The flakes may be mixed with the compost, and the accelerated biodegradation test may be performed.

In the biodegradable polyester resin composition according to an embodiment, the biodegradability after one week may be 40% to about 70%. In the biodegradable polyester resin composition according to an embodiment, the biodegradability after one week may be 45% to about 65%. In the biodegradable polyester resin composition according to an embodiment, the biodegradability after one week may be 47% to about 63%. In the biodegradable polyester resin composition according to an embodiment, the biodegradability after one week may be 49% to about 62%.

In the biodegradable polyester resin composition according to an embodiment, the biodegradability after two weeks may be about 50% to about 70%. In the biodegradable polyester resin composition according to an embodiment, the biodegradability after two weeks may be about 55% to about 68%.

In the biodegradable polyester resin composition according to an embodiment, the biodegradability after three weeks may be about 63% to about 75%. In the biodegradable polyester resin composition according to an embodiment, the biodegradability after three weeks may be about 63% to about 73%.

In the biodegradable polyester resin composition according to an embodiment, the biodegradability after four weeks may be about 73% to about 85%. In the biodegradable polyester resin composition according to an embodiment, the biodegradability after four weeks may be 75% to 82%.

In the biodegradable polyester resin composition according to an embodiment, the biodegradability after six weeks may be about 80% to about 90%. In the biodegradable polyester resin composition according to an embodiment, the biodegradability after six weeks may be about 82% to about 88%.

In the biodegradable polyester resin composition according to an embodiment, the biodegradability after nine weeks may be about 85% or more. In the biodegradable polyester resin composition according to an embodiment, the biodegradability after nine weeks may be about 87% or more. In the biodegradable polyester resin composition according to an embodiment, the biodegradability after nine weeks may be about 88% or more. In the biodegradable polyester resin composition according to an embodiment, the biodegradability after nine weeks may be about 89% or more. In the biodegradable polyester resin composition according to an embodiment, the biodegradability after nine weeks may be about 90% or more.

In the biodegradable polyester resin composition according to an embodiment, a biodegradability increase rate from week 1 to week 2 may be about 4%/week to about 15%/week. In the biodegradable polyester resin composition according to an embodiment, the biodegradability increase rate from week 1 to week 2 may be about 5%/week to about 13%/week.

The hydrolysis degree of the biodegradable polyester resin composition according to an embodiment may be measured by the following method.

To measure the hydrolysis degree, the biodegradable resin composition according to an example is immersed in 80°C water (100% RH), and a hydrolysis acceleration test is performed. After a certain period, the number average molecular weight of the biodegradable polyester resin composition according to an embodiment was measured using gel permeation chromatography (GPC). A hydrolysis degree was derived by dividing a difference between an initial number average molecular weight and a number average molecular weight after hydrolysis for a certain period by the initial number average molecular weight.

The hydrolysis degree may be calculated by Equation 5 below:

[Equation 5]

$$\text{Hydrolysis degree (\%)} = \frac{\text{Initial number average molecular weight - Number average molecular weight after hydrolysis}}{\text{Initial number average molecular weight}} \text{ X } 100$$

Here, the biodegradable polyester resin composition according to an embodiment is immersed in 80°C water, and then subjected to a hydrolysis acceleration test for a certain period. An initial number average molecular weight of the biodegradable polyester resin composition before performing the hydrolysis acceleration test and a number average molecular weight after hydrolysis of the biodegradable polyester resin composition subjected to the hydrolysis acceleration test for a certain period are measured by gel permeation chromatography (GPC).

The hydrolysis degree was derived by dividing a difference between the initial number average molecular weight and the number average molecular weight after hydrolysis for a certain period by an initial number average molecular weight.

In addition, when measuring the hydrolysis degree, the biodegradable polyester resin composition according to an embodiment is manufactured to a sheet having a thickness of about 300 $\mu$m. Next, the manufactured sheet is cut into a

size of about 30 mm × 30 mm to produce flakes. The flakes may be immersed in the hot water, and the hydrolysis acceleration test may be performed.

In the biodegradable polyester resin composition according to an embodiment, a hydrolysis degree after one week may be about 40% to about 65%. In the biodegradable polyester resin composition according to an embodiment, the hydrolysis degree after one week may be about 45% to about 63%.

In the biodegradable polyester resin composition according to an embodiment, a hydrolysis degree after two weeks may be about 80% to about 93%. In the biodegradable polyester resin composition according to an embodiment, the hydrolysis degree after two weeks may be about 85% to about 92%.

In the biodegradable polyester resin composition according to an embodiment, a hydrolysis degree after three weeks may be about 90% to about 97%. In the biodegradable polyester resin composition according to an embodiment, a hydrolysis degree after three weeks may be about 91% to about 96%.

In the biodegradable polyester resin composition according to an embodiment, a hydrolysis degree after four weeks may be about 92% to about 99%. In the biodegradable polyester resin composition according to an embodiment, a hydrolysis degree after four weeks may be about 93% to about 97%.

In the biodegradable polyester resin composition according to an embodiment, a hydrolysis degree after six weeks may be about 94%or more. In the biodegradable polyester resin composition according to an embodiment, a hydrolysis degree after six weeks may be about 95%or more.

In the biodegradable polyester resin composition according to an embodiment, a hydrolysis degree after nine weeks may be about 95%or more. In the biodegradable polyester resin composition according to an embodiment, a hydrolysis degree after nine weeks may be about 96%or more.

In the biodegradable polyester resin composition according to an embodiment, a hydrolysis degree increase rate from week 1 to week 2 may be about 25%/week to about 50%/week. In the biodegradable polyester resin composition according to an embodiment, hydrolysis degree increase rate from week 1 to week 2 may be about 29%/week to about 50%/week. In the biodegradable polyester resin composition according to an embodiment, hydrolysis degree increase rate from week 1 to week 2 may be about 30%/week to about 45%/week.

Since the first biodegradable resin composition has a hydrolysis degree and hydrolysis increase rate in the above ranges, the biodegradable resin composition according to the embodiment may have adequate durability in everyday life areas and may be easily hydrolyzed when discarded. That is, since the biodegradable resin composition according to the embodiment has a hydrolysis degree and hydrolysis increase rate in appropriate ranges, it may have sufficient hydrolysis resistance when used for an appropriate period in applications such as disposable packaging. In addition, the biodegradable resin composition according to the embodiment may be easily decomposed by hydrolysis, biodegradation, etc. after a sufficient period, when discarded not only in the soil, but also in the river or the sea.

In the biodegradable polyester resin composition according to an embodiment, the biodegradability per aliphatic carboxylic acid may be about 1.5 or more. In addition, the biodegradability per aliphatic carboxylic acid may be about 1.65 or more. The biodegradability per aliphatic carboxylic acid may be about 1.75 or more. The biodegradability per aliphatic carboxylic acid may be about 1.8 or more. The biodegradability per aliphatic carboxylic acid may be about 1.85 or more. The biodegradability per aliphatic carboxylic acid may be about 1.90 or more. The maximum value of the biodegradability per aliphatic carboxylic acid may be about 4.

The biodegradability per aliphatic carboxylic acid is a value obtained by dividing the biodegradability after 9 weeks by the proportion of the aliphatic carboxylic acid based on the total dicarboxylic acids. The biodegradability per aliphatic carboxylic acid is a value obtained by dividing the biodegradability after 9 weeks by the molar percentage of the aliphatic carboxylic acid based on the total dicarboxylic acids.

The biodegradability per the aliphatic carboxylic acid may be represented by Equation 6 below:

[Equation 6]

$$\text{Biodegradability per aliphatic carboxylic acid} = \frac{\text{Biodegradability after 9 weeks}}{\text{Content (mol\%) of aliphatic carboxylic acid among total dicarboxylic acids}}$$

By appropriately adjusting factors such as the composition of the biodegradable polyester resin (e.g., the number of first blocks, the number of second blocks, the content of the aliphatic dicarboxylic acid, or the content of the aromatic dicarboxylic acid), the production process conditions for the biodegradable polyester resin, the reinforcing material, the metal salt, the anti-hydrolysis agent, the chain extender, the oligomer, or the heat stabilizer, the biodegradability per the aliphatic carboxylic acid may fall within the desired range.

In addition, the acid value of the biodegradable polyester resin composition according to an embodiment may be about 0.01 mg KOH/g to about 3 mg KOH/g. The acid value of the biodegradable polyester resin composition according to an embodiment may be about 0.1 mg KOH/g to about 2.5 mg KOH/g. The acid value of the biodegradable polyester resin

composition according to an embodiment may be about 0.1 mg KOH/g to about 2.3 mg KOH/g.

Since the biodegradable polyester resin composition according to an embodiment has an acid value within the range, it may have hydrolysis and biodegradability characteristics as described above.

In addition, the biodegradable polyester resin composition according to an embodiment may include a nitrogen element. The nitrogen element may be derived from the metal salt and/or the chain extender. The content of the nitrogen element may be about 0.1 ppm to about 500 ppm based on the biodegradable polyester resin composition according to an embodiment. The content of the nitrogen element may be about 1 ppm to about 400 ppm based on the biodegradable polyester resin composition according to an embodiment. The content of the nitrogen element may be about 1 ppm to about 300 ppm based on the biodegradable polyester resin composition according to an embodiment. The content of the nitrogen element may be about 1 ppm to about 100 ppm based on the biodegradable polyester resin composition according to an embodiment.

In addition, the biodegradable polyester resin composition according to an embodiment may include a silicon element. The silicon element may be derived from the anti-hydrolysis agent and the like. The content of the silicon element may be about 0.1 ppm to about 100 ppm based on the biodegradable polyester resin composition according to an embodiment. The content of the silicon element may be about 0.5 ppm to about 90 ppm based on the biodegradable polyester resin composition according to an embodiment. The content of the silicon element may be about 1 ppm to about 80 ppm based on the biodegradable polyester resin composition according to an embodiment. The content of the silicon element may be about 1 ppm to about 50 ppm based on the biodegradable polyester resin composition according to an embodiment.

In addition, the biodegradable polyester resin composition according to an embodiment may include a metal element. The metal element may be derived from the metal salt. The content of the metal element may be about 0.1 ppm to about 100 ppm based on the biodegradable polyester resin composition according to an embodiment. The content of the metal element may be about 0.5 ppm to about 90 ppm based on the biodegradable polyester resin composition according to an embodiment. The content of the metal element may be about 1 ppm to about 80 ppm based on the biodegradable polyester resin composition according to an embodiment. The content of the metal element may be about 1 ppm to about 50 ppm based on the biodegradable polyester resin composition according to an embodiment.

In addition, the biodegradable polyester resin composition according to an embodiment may have surface tension, water contact angle, diiodo methane contact angle, surface free energy, dispersity and polarity.

The surface tension, the water contact angle, the diiodo methane contact angle, the surface free energy, the dispersity and the polarity may be measured on the surface of the polyester sheet.

In the biodegradable polyester resin composition according to an embodiment, the surface tension may be about 30 dyne to about 55 dyne. In the biodegradable polyester resin composition according to an embodiment, the surface tension may be about 35 dyne to about 50 dyne.

In the biodegradable polyester resin composition according to an embodiment, the water contact angle may be about 60° to about 90°. In the biodegradable polyester resin composition according to an embodiment, the water contact angle may be about 65° to about 85°. In the biodegradable polyester resin composition according to an embodiment, the water contact angle may be about 67° to about 80°.

In the biodegradable polyester resin composition according to an embodiment, the diiodo methane contact angle may be about 20° to about 40°. In the biodegradable polyester resin composition according to an embodiment, the diiodo methane contact angle may be about 20° to about 35°.

In the biodegradable polyester resin composition according to an embodiment, the surface free energy may be about 40 mN/m to about 60 mN/m. In the biodegradable polyester resin composition according to an embodiment, the surface free energy may be about 42 mN/m to about 55 mN/m.

In the biodegradable polyester resin composition according to an embodiment, the dispersity may be about 35 mN/m to about 55 mN/m. In the biodegradable polyester resin composition according to an embodiment, the dispersity may be about 40 mN/m to about 50 mN/m.

In the biodegradable polyester resin composition according to an embodiment, the polarity may be about 2 mN/m to about 8 mN/m. In the biodegradable polyester resin composition according to an embodiment, the polarity may be about 3 mN/m to about 7 mN/m.

The biodegradable polyester resin composition according to an embodiment may have a surface tension, water contact angle, diiodo methane contact angle, surface free energy, dispersion and polarity in the above ranges due to the compositions of the biodegradable polyester resin, the oligomer, the reinforcing agent, the chain extender, the metal salt, the hydrolysis-resistant agent, the heat stabilizer and the like, and processes such as the esterification reaction, the condensation polymerization reaction, the chain extension reaction and the heat treatment reaction. Accordingly, the biodegradable polyester resin composition according to an embodiment may have an appropriate degree of hydrolysis and appropriate biodegradability.

The biodegradable polyester resin composition according to an embodiment may have tensile strength, modulus and elongation at break.

First, to measure the tensile strength, modulus, and elongation at break of the biodegradable polyester resin composition according to an embodiment, a biodegradable polyester sheet is manufactured using the biodegradable polyester resin composition according to an embodiment.

The biodegradable polyester resin composition according to an embodiment may be dried at about 80°C for about 1 hour, placed in a stainless steel mold, and then compressed at about 210°C under a pressure of about 10 MPa for about 3 minutes to produce a biodegradable polyester sheet having a thickness of about 300 $\mu$m.

The tensile strength, elongation at break, and modulus may be measured by the following method. A test specimen is prepared by cutting the biodegradable polyester sheet according to the embodiment based on ASTM D638 Type V. The specimen is then tested using a universal testing machine (UTM, model 4206-001) from Instron Co. at a tensile speed of 100 mm/min. After the test, the tensile strength (kgf/mm$^2$ = 9.8 MPa), elongation at break, and modulus may be measured using the software built into the equipment.

In the biodegradable polyester resin composition according to an embodiment, the tensile strength may be about 30 MPa to about 60 MPa. In the biodegradable polyester resin composition according to an embodiment, the tensile strength may be about 35 MPa to about 60 MPa. In the biodegradable polyester resin composition according to an embodiment, the tensile strength may be about 40 MPa to about 60 MPa. In the biodegradable polyester resin composition according to an embodiment, the tensile strength may be about 45 MPa to about 60 MPa.

In the biodegradable polyester resin composition according to an embodiment, the elongation at break may be about 800% to about 1200%. In the biodegradable polyester resin composition according to an embodiment, the elongation at break may be about 800% to about 1100%. In the biodegradable polyester resin composition according to an embodiment, the elongation at break may be about 850% to about 1050%.

In the biodegradable polyester resin composition according to an embodiment, the modulus may be about 50 MPa to about 110 MPa. In the biodegradable polyester resin composition according to an embodiment, the modulus may be about 55 MPa to about 105 MPa. In the biodegradable polyester resin composition according to an embodiment, the modulus may be about 60 MPa to about 100 MPa. In the biodegradable polyester resin composition according to an embodiment, the modulus may be about 65 MPa to about 95 MPa. In the biodegradable polyester resin composition according to an embodiment, the modulus may be about 70 MPa to about 90 MPa.

Since the biodegradable polyester resin composition according to an embodiment has tensile strength, elongation at break, and modulus within the ranges as described above, it may have appropriate mechanical properties during the period of use.

The biodegradable polyester resin composition according to an embodiment includes a polyester resin including a diol, an aromatic dicarboxylic acid, and an aliphatic dicarboxylic acid; and a fibrous reinforcing material having a low turbidity change rate.

The fibrous reinforcing material may have high dispersibility and low agglomeration characteristics with respect to the diol. Accordingly, the fibrous reinforcing material may be uniformly dispersed without agglomeration in the diol and may be introduced into the polyester resin manufacturing process.

Accordingly, the fibrous reinforcing material may be uniformly dispersed within the biodegradable polyester resin composition according to an embodiment.

The fibrous reinforcing material may have high electrical conductivity. In addition, the fibrous reinforcing material may have an appropriate aspect ratio. The fibrous reinforcing material may include sulfate or carboxylate in an appropriate content. In addition, the fibrous reinforcing material may have an appropriate zeta potential. In addition, the fibrous reinforcing material may have an appropriate glass transition temperature. In addition, the fibrous reinforcing material may have an appropriate thermal decomposition start temperature. In addition, the fibrous reinforcing material may have an appropriate maximum thermal decomposition temperature.

Accordingly, the biodegradable polyester resin composition according to an embodiment may have improved mechanical properties, improved thermal properties, improved optical properties, and improved electrical properties.

The biodegradable polyester resin composition according to an embodiment may maintain a certain level or more of mechanical and chemical properties during the user's period of use.

Therefore, the biodegradable film and biodegradable molded article according to the embodiment may have improved properties as described above.

The above contents are described in more detail through the following examples. However, the following examples are only for illustrating the present invention, and the scope of the present invention is not limited thereto.

<Preparation Example>

Cellulose nanocrystals
Product Name, Manufacturer: DextraCel™, Anomera

pH: 5 to 8
Conductivity: 209 μS/cm (measured by a pH meter in an aqueous dispersion at approximately 2 wt%)
Moisture Content: 4 wt% to 6 wt%
Diameter: 5nm to 10nm
Length: 150nm to 250nm
Carboxylate content: 0.12 mol/kg to 0.2 mol/kg
Zeta potential: -40mV to -50mV
Glass transition temperature: 90.6°C
Turbidity after 1 hour: 250 NTU
Turbidity after 2 days: 233 NTU
Turbidity after 6 days: 220 NTU
Thermal decomposition start temperature: 226°C
Maximum thermal decomposition temperature: 347°C
Carboxyl group strength based on hydroxyl groups: 0.7

Preparation of pretreated cellulose nanocrystals

Dry powder-type cellulose nanocrystals having a particle size of about 1 μm to about 50 μm were dispersed in water at 1 % by weight, and then sonicated at an output of 20000 J/s for 1 minute using a tip-type ultrasonic disperser, thereby producing pretreated nanocellulose.

<Example>

Example 1

Preparation of biodegradable polyester resin

First step: Pretreating to obtain slurry

As shown in Table 1, pretreated nanocellulose, 1,4-butanediol (1,4-BDO) and terephthalic acid (TPA) were mixed in a molar ratio (1,4-BDO:TPA) of 1.25:1 and fed into a slurry tank (the bottom of the slurry tank was an anchor type, the height to an agitator was 40 mm, and three rotary blades were provided) in a non-catalytic state. Here, D50 of the terephthalic acid (TPA) was 130 μm. In Table 1 below, the content of the nanocellulose is expressed in wt%, based on the total weight of the butanediol and the terephthalic acid.

Next, the mixture was pretreated by stirring at 60°C and 100 rpm for 1 hour, and a slurry was obtained without phase separation. Accordingly, the first raw material composition was prepared in the form of a slurry.

Likewise, 1,4-butanediol and adipic acid were mixed in a molar ratio of about 1.3:1 to prepare the second raw material composition

Second step: Obtaining prepolymer

The first raw material composition was fed into a reactor through a supply line, and tetrabutyl titanate (Dupont, Tyzor TnBT product) as a titanium-based catalyst was fed at 250 ppm thereinto, followed by performing first esterification at 220°C under normal pressure for about 1 hour 30 minutes until 95% of by-product water was discharged.

The second raw material composition was introduced into the reaction product together with a titanium-based catalyst, tetrabutyl titanate (Tyzor TnBT, Dupont product), such that the content of adipic acid (AA) becomes 51 mol% based on the total moles of dicarboxylic acid components. Here, the catalyst may be added in a content of about 200 ppm based on the total weight of the diol, the aromatic dicarboxylic acid, and the aliphatic dicarboxylic acid. Then, a second esterification was performed at about 210°C and atmospheric pressure for about 2 hours and 45 minutes until 95% of by-product water was removed, thereby obtaining a second esterification product. Accordingly, a prepolymer having a weight average molecular weight of about 900 g/mol was prepared.

Third step: Polycondensing

The prepolymer, 400 ppm of a titanium-based catalyst, tetrabutyl titanate (Tyzor TnBT, Dupont product), and 200 ppm of a triethylene phosphate stabilizer were introduced into the polycondensation reactor and stabilized for about 10 minutes. Thereafter, the reaction mixture was heated to 240°C and subjected to a polycondensation reaction at 0.5 torr for 3.3 hours to prepare a polymer having a weight average molecular weight of 100,000 g/mol.

Next, the polymer was cooled to 5°C, cut using a pellet cutter, and biodegradable polyester resin pellets were prepared.

Examples 2 to 3 and Comparative Examples 1 to 3

As shown in Tables 1 and 2 below, the contents of the first raw material composition and the second raw material composition, the esterification time, and the polycondensation reaction time were varied. Except for the contents, the remaining processes were carried out substantially with reference to Example 1.

[Table 1]

| Classification | CNC (wt%) | Molar ratio of first raw material composition (BDO : TPA) | Molar ratio of second raw material composition (BDO : AA) | TPA particle size ($\mu$m) |
|---|---|---|---|---|
| Example 1 | 0.08 | 1.25:1 | 1.3:1 | 123 |
| Example 2 | 0.05 | 1.4:1 | 1.3:1 | 100 |
| Example 3 | 0.1 | 1.5:1 | 1.3:1 | 130 |
| Comparative Example 1 | | 1.1:1 | 1.3:1 | 100 |
| Comparative Example 2 | | 2.0:1 | 1.3:1 | 220 |

[Table 2]

| Classification | TPA (mol%) | AA (mol%) | First esterification process time (hr) | Second esterification process time (hr) | Polycondensation time (hr) |
|---|---|---|---|---|---|
| Example 1 | 49 | 51 | 2.0 | 2.5 | 3.3 |
| Example 2 | 48 | 52 | 1.8 | 2.2 | 4.0 |
| Example 3 | 48 | 52 | 2 | 2 | 3.6 |
| Comparative Example 1 | 48 | 52 | 2 | 2.5 | 6.0 |
| Comparative Example 2 | 54 | 46 | 2.5 | 2 | 5.5 |

Manufacture of biodegradable polyester sheet

After preparing two Teflon sheets, a stainless steel (SUS) mold (area: 12 cm X 12 cm) was placed on one Teflon sheet, and about 7 g of the prepared polyester resin pellet was put into the stainless steel (SUS) mold (area: 12 cm X 12 cm). Next, the mold was covered with another Teflon sheet, and placed in the center of a hot press (manufacturer: Widlab, model name: WL 1600SA) having a surface size of about 25 cm X 25 cm. The mold was maintained at about 210°C under a pressure of about 10 Mpa for about 3 minutes, and then detached, followed by immediately cooling in water of 20°C for about 30 seconds. Next, a biodegradable polyester sheet having an area of about 10cm X 10cm and a thickness of about 300 $\mu$m was manufactured.

Evaluation examples

Evaluation Example 1: an average particle diameter (D50) and a standard deviation

<Average particle diameter (D50) and standard deviation of aromatic dicarboxylic acid>

With regard to a particle size distribution (PSD), the average particle diameter (D50) and standard deviation (SD) of an aromatic dicarboxylic acid (TPA or DMT) were obtained using a particle size analyzer Microtrac S3500 (Microtrac Inc) according to the following conditions:
Use environment:

- Temperature: 10 to 35°C, humidity: 90% RH, non-condensing maximum
- D50 and SD, which are average particle size distributions for each section, were measured.

The standard deviation means the square root of the variance and may be calculated using software.

< Particle diameter of nanocellulose >

The particle size and average particle deviation of nanocellulose were measured using the principle of dynamic light scattering (DLS) at 25°C and a measurement angle of 175° using Zetasizer Nano ZS (Manufacturer: Marven). Here, a peak value derived through the polydispersity index (PdI) in a confidence interval of 0.5 was measured as a particle diameter.

Evaluation Example 2: Glass transition temperature

Using a differential scanning calorimeter (DSC, Q500 by TA Instruments), 4 mg of a sample was placed in an aluminum pan and heated from 0°C to 180°C at a rate of 10°C/min. The sample was then held isothermally for 5 minutes to eliminate the first thermal history. Subsequently, the sample was cooled from 180°C to -50°C at a rate of 10°C/min and held isothermally for 5 minutes to complete a cooling process. Thereafter, the sample was reheated from -50°C to 180°C at a rate of 10°C/min, and the enthalpy changes due to endothermic and exothermic events of the cellulose nanocrystals were measured. During the reheating process, the glass transition temperature (Tg) was identified.

Evaluation Example 3: Thermal decomposition start temperature and maximum thermal decomposition temperature

After the cellulose nanocrystals were dried, about 16 mg of a sample was obtained. The cellulose nanocrystal sample was placed in a thermogravimetric analyzer (TGA Q500 V20, TA Instruments) and heated from about 0°C to about 600°C at a rate of about 10°C/min under a nitrogen atmosphere. At this time, after the sample weight decreased by about 4 wt%, the thermal decomposition start temperature was measured as the temperature at which the weight began to decrease further. In addition, the maximum thermal decomposition temperature was the temperature at which the weight loss rate of the sample with respect to temperature was the greatest.

Evaluation Example 4: Turbidity change rate

Cellulose nanocrystals (CNC) were dispersed in water at a concentration of 1 wt% at a speed of 1000 rpm for 30 minutes to obtain an aqueous dispersion of the CNC. The aqueous dispersion was left at room temperature for about 1 hour, then redispersed at a speed of about 120 rpm for about 1 minute, and the turbidity after 1 hour was measured. The aqueous dispersion was then left at room temperature for 2 days, and redispersed at a speed of about 120 rpm for about 1 minute, and the turbidity after 2 days was measured. Next, the aqueous dispersion was left at room temperature for 6 days, and redispersed at a speed of about 120 rpm for about 1 minute, and the turbidity after 6 days was measured. The first turbidity change rate was calculated by dividing the difference between the turbidity after 6 days and the turbidity after 2 days by the turbidity after 2 days. The turbidity was measured using a turbidity meter (model WA3000K, Nippon Denshoku).

Evaluation Example 5: Carboxyl group strength relative to hydroxyl group content

The CNC aqueous dispersion with a concentration of 1 wt% was measured using an infrared spectrophotometer (Spectrum 3, PerkinElmer), and an infrared absorption spectrum was obtained. From the infrared absorption spectrum, the positions of the first peak (located at a wavenumber of $2500^{-1}$ to 3200 $cm^{-1}$) and the second peak (located at a wavenumber of 800 $cm^{-1}$ to 1600 $cm^{-1}$) were identified. The carboxyl group strength relative to hydroxyl group content (CHI) is calculated by dividing the maximum absorbance of the second peak (PA2) by the maximum absorbance of the first peak (PA1). The carboxyl group strength relative to hydroxyl group content may be calculated using the following equation.

[Equation 2]

$$CHI = PA2 / PA1$$

Evaluation Example 6: Molecular weight reduction rate

Flakes (about 3 cm × 3 cm) prepared from the biodegradable polyester resin sheets of the examples and comparative examples were mixed with compost (Manufacturer: Taeheung F&G, Product name: Jisaengto (Grade 1 by-product fertilizer), Compost composition: 40 wt% swine manure, 15 wt% poultry manure, 37 wt% sawdust, 5 wt% zeolite, 3

wt% microbial preparation), and a biodegradation acceleration test was conducted at 60°C and 90% humidity. Gel permeation chromatography (GPC) was used to measure the number average molecular weight of the polyester resin compositions of the examples and comparative examples after 63 days. The molecular weight reduction rate was calculated by dividing the difference between the initial number average molecular weight and the number average molecular weight after the specified period by the initial number average molecular weight.

The GPC equipment and measurement conditions were as follows:

Sample pretreatment: 0.035 mg of PBAT chip was dissolved in 1.5 ml of THF
Measurement apparatus: e2695 manufactured by Waters
Flow rate: 1 ml/min in THF
Flow amount: 50 $\mu\ell$
Column temperature: 40°C
Detector: ELSD
Column: Styragel Column HR 5E, HR4, HR2

[Equation 4]

$$\text{Molecular weight reduction rate (\%)} = \frac{\text{Initial number average molecular weight} - \text{Number average molecular weight after 63 days}}{\text{Initial number average molecular weight}} \times 100$$

Evaluation Example 7 : Biodegradability

For the samples manufactured in Examples and Comparative Examples, the biodegradability was measured by measuring the amount of carbon dioxide generated according to KS M3100-1. Specifically, an inoculum container containing only compost produced at a compost factory was prepared, and a test container to which a film was added in a volume of 5% by weight of the dry weight of the compost to the compost was prepared. Next, they were cultured for 180 days at a temperature of 58 $\pm$ 2°C, a water content of 50%, and an oxygen concentration of 6% or more. Carbon dioxide generated from each container was captured and titrated with an aqueous phenolphthalein solution to measure the amount of carbon dioxide generated from each container. The biodegradability was calculated according to Equation 7 below based on the measured carbon dioxide generation amounts.

[Equation 7]

$$\text{Biodegradability (\%)} = \frac{(CO_2 \text{ emissions from test container}) - (CO_2 \text{ emissions from inoculum container})}{\text{Theoretical } CO_2 \text{ emissions from biodegradable resin}} \times 100$$

Evaluation Example 8: Tensile strength, modulus and elongation at break

The polyester sheets with a thickness of about 300 $\mu$m, manufactured from the examples and comparative examples, were cut into test specimens according to ASTM D638 Type V. Tensile testing was conducted using a universal testing machine (UTM, model 4206-001, Instron) at a tensile speed of 100 mm/min. Tensile strength (kgf/mm$^2$ = 9.8 MPa), elongation at break, and modulus were measured using the software embedded in the equipment.

As shown in Table 3 below, the modulus, tensile strength, and elongation at break were measured for the biodegradable resin compositions of the examples and comparative examples.

[Table 3]

| Classification | Modulus (MPa) | Tensile strength | Elongation at break |
|---|---|---|---|
| Example 1 | 81 | 46.3 | 920 |
| Example 2 | 78 | 43.5 | 955 |
| Example 3 | 85 | 45.5 | 937 |
| Comparative Example 1 | 70 | 37.3 | 620 |
| Comparative Example 2 | 72 | 38.8 | 632 |

As shown in Table 4 below, the molecular weight reduction rate and the biodegradability were derived.

[Table 4]

| Classification | Molecular weight reduction rate (%) | Biodegradability (%) |
|---|---|---|
| Example 1 | 90 | 90 |
| Example 2 | 91 | 92 |
| Example 3 | 91 | 91.5 |
| Comparative Example 1 | 90 | 90 |
| Comparative Example 2 | 83 | 81 |

As shown in Tables 3 and 4, the biodegradable resin compositions according to the examples exhibited improved mechanical strength and biodegradability.

## Claims

**1.** A biodegradable polyester resin composition, comprising:

a polyester resin comprising a diol, an aromatic dicarboxylic acid, and an aliphatic dicarboxylic acid; and
a fibrous reinforcing material,
wherein a first turbidity change rate of the fibrous reinforcing material, measured by the following method, is less than 15%:
[Measurement method]

1) The fibrous reinforcing material is dispersed in water at a concentration of 1 wt% and a speed of 1000 rpm for 30 minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

**2.** The biodegradable polyester resin composition according to claim 1, wherein the second turbidity change rate of the fibrous reinforcing material, measured by the following method, is less than 20%:
[Measurement method]

1) The aqueous dispersion is left for 1 hour, and redispersed at 120 rpm for 1 minute, and then an initial turbidity of the aqueous dispersion is measured.
2) The second turbidity change rate is a value obtained by dividing a difference between the first turbidity and the initial turbidity by the first turbidity.

**3.** The biodegradable polyester resin composition according to claim 1, wherein the fibrous reinforcing material has an elongated shape, a diameter of 1 nm to 20 nm, and a length of 30 nm to 500 nm.

**4.** The biodegradable polyester resin composition according to claim 1, wherein the fibrous reinforcing material comprises sulfur in an amount of 0.5 wt% to 1.5 wt%.

**5.** The biodegradable polyester resin composition according to claim 4, wherein the fibrous reinforcing material comprises surface treatment agent comprising sulfate or carboxylate, and
the surface treatment agent is comprised in a content of 0.1 mol/kg to 0.5 mol/kg.

**6.** The biodegradable polyester resin composition according to claim 1, wherein the fibrous reinforcing material has a zeta potential of - 60 mV to -25 mV.

7. The biodegradable polyester resin composition according to claim 1, wherein the fibrous reinforcing material has a glass transition temperature of 80°C to 100°C.

8. The biodegradable polyester resin composition according to claim 1, wherein the fibrous reinforcing material has a thermal decomposition start temperature of 200°C to 240°C, and
the fibrous reinforcing material has a maximum thermal decomposition temperature of 300°C to 360°C.

9. The biodegradable polyester resin composition according to claim 1, wherein the fibrous reinforcing material comprises an alkali metal.

10. The biodegradable polyester resin composition according to claim 1, wherein the fibrous reinforcing material comprises sulfate in a content of 0.1 mol/kg to 0.5 mol/kg.

11. The biodegradable polyester resin composition according to claim 1, wherein a carboxyl group strength based on hydroxyl groups of the fibrous reinforcing material, measured by the following method, is 0.2 to 0.8:
[Measurement method]

1) An infrared absorption spectrum of an aqueous dispersion of the fibrous reinforcing material is obtained using infrared spectroscopy.
2) From the infrared absorption spectrum, a first peak is obtained in a wavenumber of 2782 $cm^{-1}$ to 2991 $cm^{-1}$, and a second peak is obtained in a wavenumber of 1531 $cm^{-1}$ to 1769 $cm^{-1}$.
3) The carboxyl group strength is a value obtained by dividing a maximum absorbance of the second peak by a maximum absorbance of the first peak.

12. A biodegradable film composition, comprising:

a polyester resin comprising a diol, an aromatic dicarboxylic acid, and an aliphatic dicarboxylic acid; and
a fibrous reinforcing material,
wherein a first turbidity change rate of the fibrous reinforcing material, measured by the following method, is less than 15%:
[Measurement method]

1) The fibrous reinforcing material is dispersed in water at a concentration of 1 wt% and a speed of 1000 rpm for 30 minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

13. A biodegradable molded article, comprising a biodegradable polyester resin composition,
the biodegradable polyester resin composition comprising:

a polyester resin comprising a diol, an aromatic dicarboxylic acid, and an aliphatic dicarboxylic acid; and
a fibrous reinforcing material,
wherein a first turbidity change rate of the fibrous reinforcing material, measured by the following method, is less than 15%:
[Measurement method]

1) The fibrous reinforcing material is dispersed in water at a concentration of 1 wt% and a speed of 1000 rpm for 30 minutes to obtain an aqueous dispersion of the fibrous reinforcing material.
2) The aqueous dispersion is left at room temperature for 2 days, and redispersed at 120 rpm for 1 minute, and a first turbidity of the aqueous dispersion is measured.
3) The aqueous dispersion is left at room temperature for 6 days, and redispersed at 120 rpm for 1 minute, and a second turbidity of the aqueous dispersion is measured.
4) The first turbidity change rate is a value obtained by dividing a difference between the second turbidity and the first turbidity by the first turbidity.

【FIG. 1】

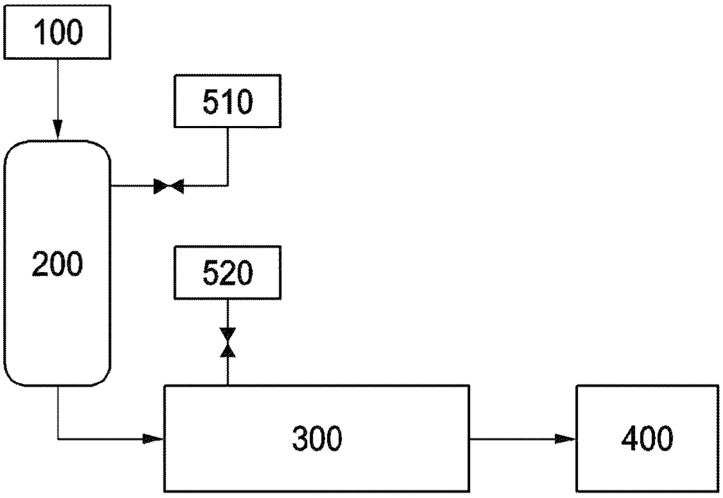


【FIG. 2】

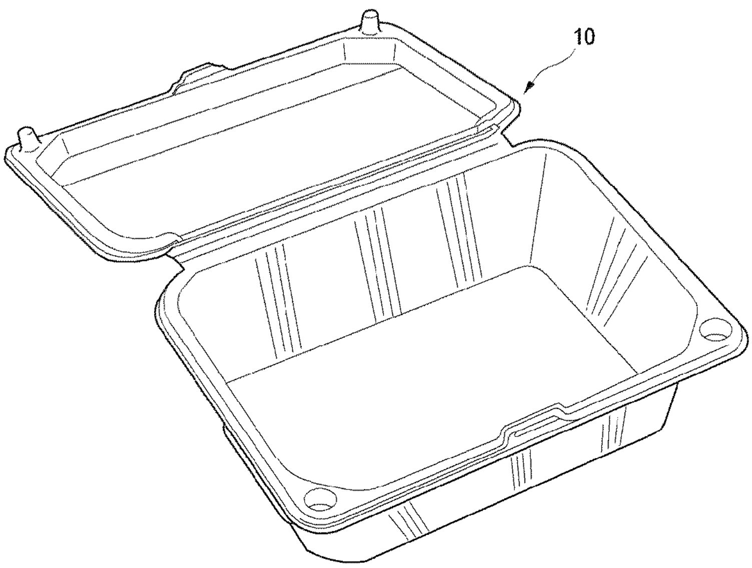

## INTERNATIONAL SEARCH REPORT

International application No.
**PCT/KR2024/001577**

**A. CLASSIFICATION OF SUBJECT MATTER**

**C08L 67/02**(2006.01)i; **C08L 1/00**(2006.01)i; **C08G 63/16**(2006.01)i; **C08K 7/02**(2006.01)i; **C08K 9/04**(2006.01)i; **C08J 5/04**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 67/02(2006.01); B29C 48/08(2019.01); C08G 63/00(2006.01); C08G 63/16(2006.01); C08G 63/183(2006.01); C08G 63/672(2006.01); D04H 1/435(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디올(diol), 디카르복실산(dicarboxylic acid), 폴리에스테르(polyester), 보강재(reinforcement), 생분해성(biodegradable), 탁도(turbidity)

**C. DOCUMENTS CONSIDERED TO BE RELEVANT**

| Category* | Citation of document, with indication, where appropriate, of the relevant passages | Relevant to claim No. |
|---|---|---|
| X<br>A | KR 10-2021-0147332 A (SKC CO., LTD.) 07 December 2021 (2021-12-07)<br>See claims 1, 3 and 5; and paragraphs [0096]-[0100] and [0128]-[0130]. | 1-4,6-8,12,13<br>5,9-11 |
| A | KR 10-2021-0057244 A (SAMYANG CORPORATION) 21 May 2021 (2021-05-21)<br>See claims 1-15. | 1-13 |
| A | KR 10-2022-0011817 A (SKC CO., LTD.) 03 February 2022 (2022-02-03)<br>See claims 1-10. | 1-13 |
| A | KR 10-2007-0122486 A (NOVAMONT S.P.A.) 31 December 2007 (2007-12-31)<br>See claims 1-23. | 1-13 |
| A | KR 10-2021-0057255 A (SAMYANG CORPORATION) 21 May 2021 (2021-05-21)<br>See claims 1-15. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 May 2024** | **20 May 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/001577**

| Patent document cited in search report | Publication date (day/month/year) | Patent family member(s) | Publication date (day/month/year) |
|---|---|---|---|
| KR 10-2021-0147332 A | 07 December 2021 | CN 113736069 A | 03 December 2021 |
| | | CN 113736069 B | 22 September 2023 |
| | | EP 3916036 A1 | 01 December 2021 |
| | | JP 2021-188038 A | 13 December 2021 |
| | | JP 7282124 B2 | 26 May 2023 |
| | | KR 10-2021-0147334 A | 07 December 2021 |
| | | KR 10-2022-0011817 A | 03 February 2022 |
| | | KR 10-2022-0015623 A | 08 February 2022 |
| | | KR 10-2022-0063901 A | 18 May 2022 |
| | | KR 10-2410615 B1 | 17 June 2022 |
| | | KR 10-2421034 B1 | 14 July 2022 |
| | | KR 10-2421044 B1 | 14 July 2022 |
| | | KR 10-2527599 B1 | 02 May 2023 |
| | | US 2021-0380757 A1 | 09 December 2021 |
| | | WO 2021-241931 A1 | 02 December 2021 |
| KR 10-2021-0057244 A | 21 May 2021 | KR 10-2438607 B1 | 01 September 2022 |
| KR 10-2022-0011817 A | 03 February 2022 | CN 113736069 A | 03 December 2021 |
| | | CN 113736069 B | 22 September 2023 |
| | | EP 3916036 A1 | 01 December 2021 |
| | | JP 2021-188038 A | 13 December 2021 |
| | | JP 7282124 B2 | 26 May 2023 |
| | | KR 10-2021-0147332 A | 07 December 2021 |
| | | KR 10-2021-0147334 A | 07 December 2021 |
| | | KR 10-2022-0015623 A | 08 February 2022 |
| | | KR 10-2022-0063901 A | 18 May 2022 |
| | | KR 10-2410620 B1 | 17 June 2022 |
| | | KR 10-2421034 B1 | 14 July 2022 |
| | | KR 10-2421044 B1 | 14 July 2022 |
| | | KR 10-2527599 B1 | 02 May 2023 |
| | | US 2021-0380757 A1 | 09 December 2021 |
| | | WO 2021-241931 A1 | 02 December 2021 |
| KR 10-2007-0122486 A | 31 December 2007 | AT 401374 T | 15 August 2008 |
| | | AT 410458 T | 15 October 2008 |
| | | AT 462744 T | 15 April 2010 |
| | | AT 509057 T | 15 May 2011 |
| | | AT E401374 T1 | 15 August 2008 |
| | | AT E410458 T1 | 15 October 2008 |
| | | AT E462744 T1 | 15 April 2010 |
| | | AT E509057 T1 | 15 May 2011 |
| | | AU 2006-224682 A1 | 21 September 2006 |
| | | AU 2006-224682 B2 | 10 November 2011 |
| | | BR PI0611457 A2 | 14 September 2010 |
| | | BR PI0611457 B1 | 19 March 2019 |
| | | CA 2601181 A1 | 21 September 2006 |
| | | CA 2601181 C | 23 July 2013 |
| | | CA 2601183 A1 | 21 September 2006 |
| | | CA 2601183 C | 23 July 2013 |
| | | CA 2601519 A1 | 21 September 2006 |
| | | CA 2601519 C | 23 July 2013 |
| | | CA 2601522 A1 | 21 September 2006 |

Form PCT/ISA/210 (patent family annex) (July 2022)

**INTERNATIONAL SEARCH REPORT**
**Information on patent family members**

International application No.
**PCT/KR2024/001577**

| Patent document cited in search report | Publication date (day/month/year) | Patent family member(s) | | | Publication date (day/month/year) |
|---|---|---|---|---|---|
| | | CA | 2601522 | C | 23 July 2013 |
| | | CN | 101142255 | A | 12 March 2008 |
| | | CN | 101142255 | B | 01 February 2012 |
| | | CN | 101142256 | A | 12 March 2008 |
| | | CN | 101142256 | B | 21 December 2011 |
| | | CN | 101142276 | A | 12 March 2008 |
| | | CN | 101142276 | B | 04 July 2012 |
| | | CN | 101283020 | A | 08 October 2008 |
| | | CN | 101283020 | B | 06 March 2013 |
| | | CN | 103087299 | A | 08 May 2013 |
| | | CN | 103087299 | B | 01 April 2015 |
| | | EG | 25733 | A | 19 June 2012 |
| | | EP | 1858951 | A1 | 28 November 2007 |
| | | EP | 1858951 | B1 | 31 March 2010 |
| | | EP | 1858951 | B2 | 14 June 2017 |
| | | EP | 1858978 | A1 | 28 November 2007 |
| | | EP | 1858978 | B1 | 16 July 2008 |
| | | EP | 1863860 | A1 | 12 December 2007 |
| | | EP | 1863860 | B1 | 08 October 2008 |
| | | EP | 1863861 | A1 | 12 December 2007 |
| | | EP | 1863861 | B1 | 11 May 2011 |
| | | EP | 2163567 | A2 | 17 March 2010 |
| | | EP | 2163567 | A3 | 28 April 2010 |
| | | EP | 2163567 | B1 | 20 December 2017 |
| | | EP | 2287224 | A1 | 23 February 2011 |
| | | EP | 2287224 | B1 | 20 December 2017 |
| | | ES | 2310913 | T3 | 16 January 2009 |
| | | ES | 2316056 | T3 | 01 April 2009 |
| | | ES | 2342192 | T3 | 02 July 2010 |
| | | ES | 2342192 | T5 | 11 October 2017 |
| | | ES | 2365532 | T3 | 06 October 2011 |
| | | ES | 2661949 | T3 | 04 April 2018 |
| | | ES | 2662017 | T3 | 05 April 2018 |
| | | HK | 1118845 | A1 | 20 February 2009 |
| | | HK | 1118846 | A1 | 20 February 2009 |
| | | HK | 1118850 | A1 | 20 February 2009 |
| | | IT | MI20050452 | A1 | 19 September 2006 |
| | | JP | 2008-533255 | A | 21 August 2008 |
| | | JP | 2008-533255 | T | 21 August 2008 |
| | | JP | 2008-533256 | A | 21 August 2008 |
| | | JP | 2008-533256 | T | 21 August 2008 |
| | | JP | 2008-536961 | A | 11 September 2008 |
| | | JP | 2008-536961 | T | 11 September 2008 |
| | | JP | 5011274 | B2 | 29 August 2012 |
| | | JP | 5052496 | B2 | 17 October 2012 |
| | | JP | 5264474 | B2 | 14 August 2013 |
| | | KR | 10-1216846 | B1 | 31 December 2012 |
| | | MX | 2007011496 | A | 24 October 2008 |
| | | NO | 20075316 | A | 17 October 2007 |
| | | NO | 20075316 | L | 17 October 2007 |

Form PCT/ISA/210 (patent family annex) (July 2022)

**INTERNATIONAL SEARCH REPORT**
**Information on patent family members**

International application No.
**PCT/KR2024/001577**

| Patent document cited in search report | Publication date (day/month/year) | Patent family member(s) | Publication date (day/month/year) |
|---|---|---|---|
| | | NO 344336 B1 | 04 November 2019 |
| | | PL 1858951 T3 | 30 September 2010 |
| | | PL 1858951 T5 | 28 February 2018 |
| | | PL 1858978 T3 | 30 January 2009 |
| | | PL 1863860 T3 | 30 April 2009 |
| | | PL 1863861 T3 | 31 October 2011 |
| | | PL 2163567 T3 | 31 July 2018 |
| | | PL 2287224 T3 | 31 July 2018 |
| | | RU 2007136025 A | 27 April 2009 |
| | | RU 2415879 C2 | 10 April 2011 |
| | | TR 201803019 T4 | 21 March 2018 |
| | | UA 89401 C2 | 25 January 2010 |
| | | US 2008-0188593 A1 | 07 August 2008 |
| | | US 2008-0194770 A1 | 14 August 2008 |
| | | US 2008-0214702 A1 | 04 September 2008 |
| | | US 2009-0005472 A1 | 01 January 2009 |
| | | US 2012-0219740 A1 | 30 August 2012 |
| | | US 2012-0220687 A1 | 30 August 2012 |
| | | US 2012-0220698 A1 | 30 August 2012 |
| | | US 2012-0225230 A1 | 06 September 2012 |
| | | US 8193298 B2 | 05 June 2012 |
| | | US 8193299 B2 | 05 June 2012 |
| | | US 8193300 B2 | 05 June 2012 |
| | | US 8193301 B2 | 05 June 2012 |
| | | US 8461273 B2 | 11 June 2013 |
| | | US 8466237 B2 | 18 June 2013 |
| | | US 8476378 B2 | 02 July 2013 |
| | | US 8481653 B2 | 09 July 2013 |
| | | WO 2006-097353 A1 | 21 September 2006 |
| | | WO 2006-097354 A1 | 21 September 2006 |
| | | WO 2006-097355 A1 | 21 September 2006 |
| | | WO 2006-097356 A1 | 21 September 2006 |
| KR 10-2021-0057255 A | 21 May 2021 | KR 10-2438625 B1 | 01 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20120103158